(19) Europäisches Patentamt / European Patent Office / Office européen des brevets

(11) **EP 4 492 644 A1**

(12) **EUROPEAN PATENT APPLICATION**
published in accordance with Art. 153(4) EPC

(43) Date of publication:
**15.01.2025 Bulletin 2025/03**

(21) Application number: 23766738.1

(22) Date of filing: **03.03.2023**

(51) International Patent Classification (IPC):
*H02K 3/30* (2006.01)   *H01B 3/30* (2006.01)
*H01B 3/47* (2006.01)   *H01B 17/62* (2006.01)
*H01F 5/06* (2006.01)   *H01F 27/32* (2006.01)
*H02K 3/34* (2006.01)

(52) Cooperative Patent Classification (CPC):
**H01B 3/30; H01B 3/47; H01B 17/62; H01F 5/06;
H01F 27/32; H02K 3/30; H02K 3/34**

(86) International application number:
**PCT/JP2023/008026**

(87) International publication number:
**WO 2023/171562 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.03.2022 JP 2022035082**

(71) Applicant: Kuraray Co., Ltd.
**Kurashiki-shi, Okayama 710-0801 (JP)**

(72) Inventors:
• **INOUE, Yuki
  Tokyo 100-0004 (JP)**
• **KATSUYA, Satoshi
  Okayama-shi, Okayama 702-8601 (JP)**
• **TSUNOFURI, Shohei
  Kurashiki-shi, Okayama 713-8550 (JP)**

(74) Representative: **Müller-Boré & Partner
Patentanwälte PartG mbB
Friedenheimer Brücke 21
80639 München (DE)**

(54) **INSULATING MEMBER AND INSULATING SHEET**

(57)     Provided is an insulating member that can insulate a conductive member and can also fix the conductive member. The insulating member is an insulating member (10) for insulating a conductive member (6, 8), the insulating member (10) including at least one insulating layer and at least one void layer, wherein the insulating member (10) fixes the conductive member, the at least one void layer containing a thermoplastic resin and a plurality of reinforcing fibers, voids are defined between the plurality of reinforcing fibers, and a porosity Y [%] of the void layer in the insulating member and a thickness X [μm] of the insulating layer in the insulating member satisfy the following formula (1): $0.01 \leq Y/X \leq 4.75$ (1).

Fig. 3A

**Description**

CROSS REFERENCE TO THE RELATED APPLICATION

This application is based on and claims Convention priority to Japanese patent application No. 2022-035082, filed March 8, 2022, the entire disclosure of which is herein incorporated by reference as a part of this application.

BACKGROUND OF THE INVENTION

(Field of the Invention)

The present invention relates to an insulating member and an insulating sheet used for forming the insulating member.

(Description of Related Art)

Insulating members are used in various locations to insulate conductive members. In particular, an insulating member is an essential element for insulating the inside of a rotating electrical machine. For example, Patent Document 1 (JP Laid-open Patent Publication No. 2021-129408) describes, as shown in a cross-sectional view shown in Fig. 7, an inner rotor-type induction motor 1 including an annular stator 2 and a rotor 3 located radially inward of the stator 2, in which a plurality of teeth 4a and a plurality of slot portions 8 are formed alternately in the circumferential direction, and a thermoplastic liquid crystal polymer film is used as an insulating member 7 for insulating each coil 6 from each slot portion 8.

Also, Patent Document 2 (JP Laid-open Patent Publication No. 2020-120528) proposes using an insulating sheet including a foamed portion and a non-foamed portion to insulate a coil from each slot portion and to fix the coil to the slot portion by the foamed portion.

[Related Document]

[Patent Document]

[Patent Document 1] JP Laid-open Patent Publication No. 2021-129408
[Patent Document 2] JP Laid-open Patent Publication No. 2020-120528

SUMMARY OF THE INVENTION

However, the thermoplastic liquid crystal polymer film of Patent Document 1 can prevent the coil from directly contacting with the slot portion but cannot fix the coil in place.

Meanwhile, the insulating sheet of Patent Document 2 has insulating properties provided by the non-foamed portion and can fix the coil to the slot portion by the foamed portion, but there is a risk of the coil being contaminated by foaming, and it is difficult to control the foaming to expand anisotropically.

Therefore, an object of the present invention is to provide an insulating member which solves such problems of the conventional technology and which can not only insulate a conductive member but also fix the conductive member without contaminating the conductive member, and an insulating sheet (insulating member precursor) for obtaining such an insulating member.

As a result of conducting intensive studies to solve the above problems, the present inventors have found that an insulating member including a specific expandable layer in combination with an insulating layer can be anisotropically expanded while ensuring insulating properties, and as a result, the insulating member can efficiently fix a conductive member in addition to having insulating properties. Then, the present inventors have completed the present invention.

Specifically, the present invention may include the following aspects.

[Aspect 1]

An insulating member for insulating a conductive member, the insulating member comprising at least one insulating layer and at least one void layer, wherein the insulating member fixes the conductive member,

the at least one void layer includes a thermoplastic resin and a plurality of reinforcing fibers,
voids are formed between the plurality of reinforcing fibers, and
a porosity Y [%] of the void layer in the insulating member and a thickness X [μm] of the insulating layer in the insulating member satisfy the following formula (1):

$$0.01 \leq Y/X \leq 4.75 \qquad (1).$$

[Aspect 2]

The insulating member according to aspect 1, wherein the reinforcing fibers are at least one selected from the group consisting of glass fibers, liquid crystal polyester fibers, aramid fibers, and carbon fibers.

[Aspect 3]

The insulating member according to aspect 1 or 2, wherein the at least one insulating layer includes a thermoplastic resin or a thermosetting resin, the thermoplastic resin or the thermosetting resin optionally including a filler and/or strengthening fibers.

[Aspect 4]

The insulating member according to aspect 1 or 2, wherein the at least one insulating layer includes at least one thermoplastic resin selected from the group consisting of polyetherimide, polyethylene terephthalate, polyethylene naphthalate, and liquid crystal polyester, the at least one thermoplastic resin optionally including a filler and/or strengthening fibers.

[Aspect 5]

The insulating member according to any one of aspects 1 to 4, wherein the at least one insulating layer includes a thermoplastic resin having a melting point or softening point Ti,

the at least one void layer includes a thermoplastic resin having a melting point or softening point Tb, and
Ti ≥ Tb is satisfied.

[Aspect 6]

The insulating member according to any one of aspects 1 to 5, wherein the thermoplastic resin constituting the at least one void layer is at least one selected from the group consisting of polyetherimide, liquid crystal polyester, polycarbonate, and phenoxy resin.

[Aspect 7]

The insulating member as recited in any one of aspects 1 to 6, and the insulating member being configured to be used in a rotating electrical machine.

[Aspect 8]

A rotating electrical machine comprising, in at least a part of the rotating electrical machine, the insulating member as recited in aspect 7.

[Aspect 9]

A stator of a rotating electrical machine, the stator comprising:

a stator core having teeth and slots alternately in a circumferential direction thereof; and
coils mounted on the stator core; and
the insulating member as recited in aspect 7, the insulating member being disposed between an inner peripheral surface of a slot and a coil.

[Aspect 10]

An insulating sheet at least comprising at least one insulating layer and at least one expandable layer, wherein

the at least one expandable layer includes a thermoplastic resin and a plurality of reinforcing fibers,
the reinforcing fibers have a plurality of intersections,
at least some of the intersections are bonded with the thermoplastic resin, and
a volume content of reinforcing fibers each having a bent ratio of 1.004 or more with respect to a volume of the total reinforcing fibers is 20 vol% or more (may be preferably 30 vol% or more, more preferably 35 vol% or more, and further preferably 40 vol% or more), the bent ratio being defined by the following formula (2),

$$\text{bent ratio} = \text{fiber length} / \text{shortest distance between opposite ends of a fiber}$$

(2).

[Aspect 11]

The insulating sheet according to aspect 10, wherein, in the at least one expandable layer, a volume content of the reinforcing fibers each having a bent ratio of 1.004 or more with respect to a volume of that expandable layer is 3 to 50 vol% (preferably 5 to 45 vol% and more preferably 10 to 40 vol%).

[Aspect 12]

The insulating sheet according to aspect 10 or 11, wherein an average fiber length of the reinforcing fibers is 3 to 100 mm.

[Aspect 13]

The insulating sheet according to any one of aspects 10 to 12, wherein the reinforcing fibers are at least one selected from the group consisting of glass fibers, liquid crystal polyester fibers, aramid fibers, and carbon fibers.

[Aspect 14]

The insulating sheet according to any one of aspects 10 to 13, wherein a resin having adhesiveness to a metal is exposed on at least one surface of the insulating sheet.

[Aspect 15]

The insulating sheet according to any one of aspects 10 to 14, wherein the resin having adhesiveness to a metal is at least one selected from the group consisting of polyetherimide, liquid crystal polyester, polycarbonate, and phenoxy.

[Aspect 16]

The insulating sheet according to any one of aspects 10 to 15, wherein the at least one insulating layer includes a thermoplastic resin or a thermosetting resin, the thermoplastic resin or the thermosetting resin optionally including a filler and/or strengthening fibers.

[Aspect 17]

The insulating sheet according to any one of aspects 10 to 15, wherein the at least one insulating layer includes at least one thermoplastic resin selected from the group consisting of polyetherimide, polyethylene terephthalate, polyethylene naphthalate, and liquid crystal polyester, the at least one thermoplastic resin optionally including a filler and/or strengthening fibers.

[Aspect 18]

The insulating sheet according to any one of aspects 10 to 17, wherein

the at least one insulating layer includes a thermoplastic resin having a melting point or softening point Ti,
the at least one expandable layer includes a thermoplastic resin having a melting point or softening point Tb, and
Ti $\geq$ Tb is satisfied.

[Aspect 19]

The insulating sheet according to any one of aspects 10 to 18, wherein the thermoplastic resin constituting the at least one expandable layer is at least one selected from the group consisting of polyetherimide, liquid crystal polyester, polycarbonate, and phenoxy resin.

[Aspect 20]

The insulating sheet according to any one of aspects 10 to 19, wherein

the at least one insulating layer includes a thermoplastic resin, and
the insulating layer include a penetration layer having a thickness of 20 $\mu$m or less at an interface with the expandable layer.

[Aspect 21]

A method for producing an insulating member, the method including:

a step of preparing the insulating sheet as recited in any one of aspects 10 to 20, or at least one insulating layer and at least one expandable layer as recited in any one of aspects 10 to 20; and
a step of heating the insulating sheet or the at least one insulating layer and the at least one expandable layer to a temperature equal to or higher than the melting point or softening point Tb of the thermoplastic resin forming the at least one expandable layer, to expand the expandable layer to fix and insulate a conductive member.

As used herein, the singular forms, "a," "an", and "the" are intended to include plural forms including "at least one", unless the content clearly indicates otherwise. As used herein, the terms "and/or", "at least one", and "one or more" include any and all combinations of the relevant listed items.
Since the expandable layer includes reinforcing fibers each having a specific bent ratio, the insulating sheet of the present invention can anisotropically expand in a space between conductive members, and the insulating member thus formed not only can fix the opposing conductive members but also has excellent insulating properties.

BRIEF DESCRIPTION OF THE DRAWINGS

In any event, the present invention will become more clearly understood from the following description of preferred embodiments thereof, when taken in conjunction with the accompanying drawings. The drawings are not necessarily to scale and are exaggerated to make the principles of the present invention understandable. However, the embodiments and the drawings are given only for the purpose of illustration and explanation, and are not to be taken as limiting the scope of the present invention in any way whatsoever, which scope is to be determined by the appended claims.

Fig. 1A is a partial schematic cross-sectional view for describing an insulating member of a first embodiment of the present invention;
Fig. 1B is a partially enlarged schematic cross-sectional view of the schematic cross-sectional view of Fig. 1A;
Fig. 2 is a partial schematic cross-sectional view for describing an insulating member of a second embodiment of the present invention;
Fig. 3A is a partial schematic cross-sectional view for describing a method for forming the insulating member of the first embodiment of the present invention;
Fig. 3B is a partially enlarged schematic cross-sectional view of the schematic cross-sectional view of Fig. 3A;
Fig. 4 is a conceptual diagram for describing the bent ratio of a reinforcing fiber.
Fig. 5 shows schematic cross-sectional views each showing a pre-expansion state that can be taken by an insulating sheet of the present invention;
Fig. 6A is a schematic perspective view for describing production of a sample for push-out load test;
Fig. 6B is a schematic cross-sectional view for describing the production of the sample for push-out load test;
Fig. 7 is a schematic cross-sectional view for describing a rotating electrical machine described in Patent Document 1;
Fig. 8 is an enlarged photograph (magnification: 200 times) of a cross-section of an insulating sheet obtained in Example 11; and
Fig. 9 is an enlarged photograph (magnification: 200 times) of a cross-section of an insulating sheet obtained in Comparative Example 5.

DESCRIPTION OF EMBODIMENTS

<Insulating Member>

An insulating member of the present invention is an insulating member for insulating a conductive member, and the insulating member includes at least one insulating layer and at least one void layer and fixes the conductive member. In addition, the present invention also includes a rotating electrical machine that includes, in at least a part of the rotating electrical machine, an insulating member for a rotating electrical machine.

The at least one void layer includes a thermoplastic resin and a plurality of reinforcing fibers, voids are formed between the plurality of reinforcing fibers, and a porosity Y [%] of the void layer in the insulating member and a thickness X [$\mu$m] of the insulating layer in the insulating member satisfy the following formula (1):

$$0.01 \leq Y/X \leq 4.75 \qquad (1).$$

Thus, the insulating member can ensure desired insulating properties while having the void layer.

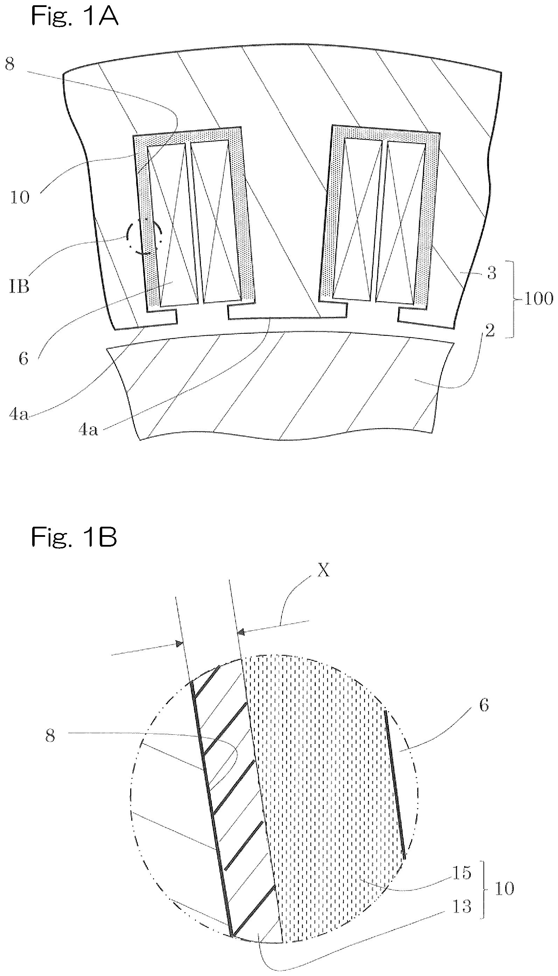

Fig. 1A shows a state where an insulating member according to a first embodiment of the present invention is placed in a stator of a rotating electrical machine. Fig. 1A is a partial schematic cross-sectional view for describing the first embodiment of the insulating member of the present invention, and Fig. 1B is a partially enlarged schematic cross-sectional view of the schematic cross-sectional view of Fig. 1A.

As shown in Fig. 1A, a rotating electrical machine 100 includes a stator 2 and an inner rotor 3, and the stator 2 includes a stator core 4 having teeth 4a and slot portions 8 alternately in the stator circumferential direction, and a coil 6 which is a conductive member mounted on this stator core. The rotating electrical machine may include an outer rotor, instead of the inner rotor.

An insulating member 10 is placed in a slot portion 8 in the stator core 4 and is interposed between a coil 6, which is a conductive member, and a tooth 4a to prevent the coil 6 from directly contacting with the slot portion 8. Fig. 1B is a schematic enlarged view for showing an insulating layer 13 and a void layer 15 included in the insulating member 10. As shown in Fig. 1B, the insulating member 10 includes the insulating layer 13 and the void layer 15. The insulating layer 13 is in close contact with the inner peripheral surface of the slot portion 8, and the void layer 15 is in close contact with the coil 6, so that the coil 6 is fixed to the slot portion 8 by the insulating member 10. In addition, the insulating layer 13 has a thickness of X $\mu$m and provides insulating properties to the insulating member.

The void layer 15 includes a thermoplastic resin and a plurality of reinforcing fibers, and voids are formed between the plurality of reinforcing fibers. The void layer 15 may have a continuous porous structure. Where the void layer 15 has a connecting hole structure, the connecting hole structure can be used, for example, for passing a cooling liquid therethrough. For example, a motor can be cooled by passing a cooling liquid through the voids existing as connecting holes.

The voids in the void layer 15 are formed by expansion of an expandable layer in an insulating sheet as described later. In the expandable layer, a plurality of reinforcing fibers curved at a predetermined bent ratio are fixed with a thermoplastic resin, and when the insulating sheet is heated to a temperature equal to or higher than the melting point or softening point Tb of this thermoplastic resin, stress accumulated inside the curved reinforcing fibers is released, and the expandable layer expands mainly in the thickness direction while forming voids between the reinforcing fibers, thereby forming an insulating member. In addition, in the void layer 15, since the voids are formed between the reinforcing fibers by expansion of the reinforcing fibers, there is no risk of contamination of a member due to unexpected foaming, as compared to the case where a foaming member is used. Furthermore, the expandable layer can be expanded anisotropically in the thickness direction thereof, so that it is easier to control the configuration of the void layer.

The expandable layer in the insulating sheet expands to form the void layer, whereby the coil 6, which cannot be fixed in place by the insulating sheet before expansion, can be fixed in place by the insulating member 10 having the void layer 15. Where a high pressing force is applied to the slot portion 8 and the coil 6 by the expansion stress of the insulating sheet, or where the thermoplastic resin in the insulating member adheres to the slot portion 8 and/or the coil 6, fixation by the insulating member can be maintained owing to the pressing force or adhesion by the resin even when a load is applied.

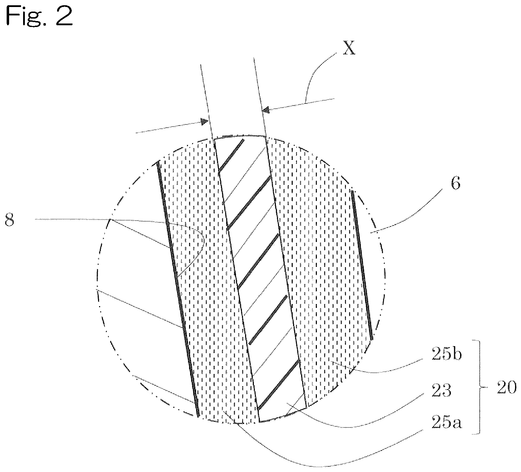

Fig. 2 is a partial schematic cross-sectional view for describing a second embodiment of the insulating member of the present invention. In Fig. 2, an insulating member 20 includes a void layer 25a, an insulating layer 23, and a void layer 25b in this order. That is, the insulating member 20 has a structure in which the insulating layer 23 is inserted between the void layers 25a and 25b, and the rest is the same as Figs. 1A and 1B.

In the insulating member 20 shown in Fig. 2, the void layer 25a of the insulating member 20 on one side is in close contact with the surface of the slot portion 8, and the void layer 25b on the other side is in close contact with the coil 6. As a result, the coil 6 is fixed to the slot portion 8 by the insulating member 20.

In these insulating members 10 and 20, from the viewpoint of ensuring the insulating properties of the insulating members while being capable of fixing a conductive member in a state where the void layer has a predetermined porosity, the insulating layer has a thickness having a predetermined ratio to the porosity of the void layer.

Therefore, the porosity Y [%] of the void layer in the insulating member and the thickness X [$\mu$m] of the insulating layer in the insulating member satisfy the following formula (1):

$$0.01 \leq Y/X \leq 4.75 \qquad (1).$$

The value of Y/X may be preferably 0.05 or more, more preferably 0.10 or more, further preferably 0.20 or more, and even more preferably 0.30 or more. In addition, the value of Y/X may be preferably 4.00 or less, more preferably 3.00 or less, further preferably 2.00 or less, and even more preferably 1.60 or less.

The porosity Y may be set as appropriate in relation to a conductive member to be fixed by the insulating member, and may be, for example, 5 to 95%, preferably 30 to 90%, and more preferably 50 to 80%. Where the porosity is the lower limit or more, the adhesiveness to a conductive member is excellent. Where the porosity is the upper limit or less, the strength of the void layer is not decreased, and the handleability is excellent.

The insulating member only has to include at least one void layer, and where the insulating member include a plurality of void layers, the porosity Y of the void layer in the insulating member is calculated as the porosity of all the void layers.

Specifically, the porosity can be determined as follows. In the insulating member, the thickness of the void layer is measured by cross-sectional observation. Where a plurality of void layers exist, the thickness of each of the plurality of void layers is measured, and these thicknesses are summed up. The bulk density (g/cm$^3$) of each void layer is calculated by dividing the basis weight (g/m$^2$), or the weight per unit area, of the void layer by the thickness ($\mu$m) of the void layer.

Next, the true density of the void layer (= volume ratio of reinforcing fibers $\times$ density of reinforcing fibers + volume ratio of thermoplastic resin $\times$ density of thermoplastic resin) is calculated. Then, the porosity is calculated by the following formula.

Porosity (%) = (1 - bulk density of void layer / true density of void layer) $\times$ 100

The insulating member only has to include at least one insulating layer, and where the insulating member include a plurality of insulating layers, the sum of the thicknesses of all the insulating layers in the insulating member is used as the thickness X of the insulating layer in the insulating member. The thickness of the insulating layer is measured in the insulating member by cross-sectional observation in the same manner as for the void layer described above.

In addition, the thickness X of the insulating layer can be selected from a wide range of 10 to 1000 $\mu$m, and may be, for example, 20 to 500 $\mu$m, preferably 30 to 350 $\mu$m, and more preferably 50 to 250 $\mu$m. Where the thickness is the lower limit or more, the insulating member has excellent insulating properties, and when the thickness is the upper limit or less, the insulating member is excellent in ease of shaping and insertion into gaps.

The insulating member only has to include at least one insulating layer and at least one void layer, and may have a two-layer structure of insulating layer/void layer as shown in Fig. 1B, a three-layer structure of void layer/insulating layer/void layer as shown in Fig. 2 or a three-layer structure of insulating layer/void layer/insulating layer, a four-layer structure of insulating layer/void layer/insulating layer/void layer or the like, or even a five or more-layer structure or the like. In the insulating member, the outermost layer may be an insulating layer or a void layer, and can be set as appropriate according to the use.

<Insulating Layer>

The material of the insulating layer is not particularly limited as long as insulating properties can be provided to the insulating member, and may be an inorganic material or an organic material. From the viewpoint of moldability, the insulating layer may preferably include a thermoplastic resin optionally including a filler and/or strengthening fibers, or a thermosetting resin optionally including a filler and/or strengthening fibers. These materials may be used individually, or two or more of these materials may be used in combination.

Examples of the thermoplastic resin include: vinyl-based resins (polymers synthesized from monomers having a vinyl group $CH_2$=CH- or a vinylidene group $CH_2$=C<, or derivatives thereof, such as polyolefin-based resins, vinyl chloride-based resins, and vinyl acetate-based resins); polyamide-based resins such as aliphatic polyamide-based resins (polyamide 6, polyamide 66, polyamide 11, polyamide 12, polyamide 610, polyamide 612, etc.), semi-aromatic polyamide-based resins, and fully aromatic polyamide-based resins; polyester-based resins such as polyethylene terephthalate, polytrimethylene terephthalate, polybutylene terephthalate, and polyethylene naphthalate; fluorine-based resins such as polytetrafluoroethylene-based resins; thermoplastic polyimide-based resins such as semi-aromatic polyimide-based resins, polyamide imide-based resins, and polyetherimide-based resins; polysulfone-based resins such as polysulfone-based resins and polyethersulfone-based resins; modified polyphenylene ether resins; polyether ketone-based resins such as polyether ketone-based resins, polyether ether ketone-based resins, and polyether ketone ketone-based resins; polycarbonate-based resins; amorphous polyarylate-based resins; liquid crystal polyester-based resins such as fully aromatic polyester-based resins; urethane-based, styrene-based, olefin-based, vinyl chloride-based, ester-based, and amide-based thermoplastic elastomers; etc. These thermoplastic resins may be used individually, or two or more of these thermoplastic resins may be used in combination.

As the thermoplastic resin used in the insulating layer, a thermoplastic resin having a glass transition temperature of 100°C or higher may be preferably used in the case of an application requiring heat resistance in a structure including the insulating sheet after expansion. Examples of the thermoplastic resin having a glass transition temperature of 100°C or higher include polytetrafluoroethylene-based resins, thermoplastic polyimide-based resins, polysulfone-based resins, semi-aromatic polyamide-based resins, polyether ketone-based resins, polycarbonate-based resins, liquid crystal polyester-based resins, etc. Among these, from the viewpoint of mechanical properties and moldability, the thermoplastic resin may be at least one thermoplastic resin selected from the group consisting of thermoplastic polyimide-based resins (preferably, polyetherimide-based resins), polyether ketone-based resins (preferably, polyether ether ketone-based resins), semi-aromatic polyamide-based resins, polycarbonate-based resins, and polysulfone-based resins. In the application requiring heat resistance, the glass transition temperature of the thermoplastic resin may be preferably 105°C or higher and further preferably 110°C or higher. The upper limit is not particularly limited, and from the viewpoint of economical use of the insulating sheet, the glass transition temperature may be 300°C or lower. The glass transition temperature is a value measured by the method described in EXAMPLES below.

From the viewpoint of suppressing flow of the thermoplastic resin which constitutes the insulating layer due to softening during expansion, the thermoplastic resin constituting the insulating layer may have a retention rate of storage modulus ($E'_{Tg}/E'_{25} \times 100$) of, for example, 0.1% or more, or 0.5% or more, the retention rate being expressed as a ratio of a storage modulus $E'_{Tg}$ at the softening point (Tg) of the thermoplastic resin constituting the void layer to a storage modulus $E'_{25}$ at room temperature (25°C).

Examples of the thermosetting resin used in the present invention include phenol resins, urea resins, melamine resins, silicone resins, epoxy resins, thermosetting polyimide-based resins, etc.

Among these, from the viewpoint of heat resistance and ease of handling, thermoplastic polyimide-based resins (preferably, polyetherimide-based resins), polyethylene terephthalate, polyethylene naphthalate, liquid crystal polyester, etc., may be preferably used.

The insulating layer may include a filler and/or strengthening fibers, and further, various additives as needed. As the filler, the strengthening fibers, and the additives, known or commonly used materials may be used.

<Void Layer>

The thermoplastic resin constituting the void layer is not particularly limited as long as the thermoplastic resin can be softened or melted in the expandable layer to achieve expansion due to repulsion of the reinforcing fibers as described later, and can be set as appropriate according to the materials used in the insulating layer. In addition, the thermoplastic resin constituting the void layer and the thermoplastic resin constituting the insulating layer may be the same or different.

For example, where the insulating layer includes a thermoplastic resin having a melting point or softening point Ti, the thermoplastic resin constituting the void layer includes a thermoplastic resin having a melting point or softening point Tb, and the melting point or softening point Tb preferably satisfies Ti ≥ Tb. More preferably, with reference to Ti of the thermoplastic resin constituting the insulating layer, Tb of the thermoplastic resin constituting the void layer may be (Ti - 120)°C to Ti°C, and preferably (Ti - 50)°C to Ti°C.

Where the thermoplastic resin has a melting point, the melting point may be used as a reference temperature, and where the thermoplastic resin does not have a melting point, the softening point (glass transition temperature) of the thermoplastic resin may be used as a reference temperature.

As the thermoplastic resin constituting the void layer, the thermoplastic resins used in the insulating layer can be exemplified. Among these, from the viewpoint of promoting expansion in the void layer, polyolefin-based resins, aliphatic polyamide-based resins, polyetherimide, liquid crystal polyester, polycarbonate, phenoxy resin, etc., may be preferably used as the thermoplastic resin constituting the void layer. In particular, from the viewpoint of enhancing adhesiveness to a portion in contact with the insulating member (e.g., the surface of a conductive member), thermoplastic polyimide-based resins (preferably, polyetherimide-based resins) may be preferably used.

The reinforcing fibers constituting the void layer are not particularly limited as long as expandability can be exhibited, and may be organic fibers or may be inorganic fibers. These fibers may be used individually, or two or more types of these fibers may be used in combination. Examples of the inorganic fibers include glass fibers, carbon fibers, various ceramic fibers (e.g., silicon carbide fibers, silicon nitride fibers, silica fibers, alumina fibers, zirconia fibers, boron fibers, basalt fibers, etc.), various metal fibers (e.g., gold, silver, copper, iron, nickel, titanium, stainless steel, etc.), etc. The organic fibers are not particularly limited as long as the glass transition temperature or melting point thereof is higher than the softening point of the thermoplastic resin which bonds the intersections of the reinforcing fibers, and examples of the organic fibers include fully aromatic polyester-based fibers, polyphenylene sulfide fibers, para-aramid fibers, polysulfonamide fibers, phenol resin fibers, polyimide fibers, fluorine fibers, etc. In the present invention, the softening point mainly means the heat deformation temperature of the thermoplastic resin, and may be, for example, the load deflection temperature (JIS K 7207). In particular, in the case of an amorphous resin, the softening point means the glass transition temperature thereof.

Among these, from the viewpoint of increasing the repulsive force of the reinforcing fibers, glass fibers, liquid crystal polyester fibers, aramid fibers, and carbon fibers may be preferably used. From the viewpoint of improving the insulating properties of the insulating member, insulating fibers (e.g., glass fibers, liquid crystal polyester fibers, aramid fibers, etc.) may also be used.

<Method for Forming Insulating Member>

A method for forming or producing an insulating member includes: a step of preparing an insulating sheet; and a step of heating the insulating sheet to a temperature equal to or higher than the softening point or melting point of a thermoplastic resin forming at least one expandable layer in the insulating sheet, to expand the expandable layer to fix and insulate a conductive member.

The method for producing an insulating member may include: a step of preparing at least one insulating layer and at least one expandable layer; and a step of heating the at least one insulating layer and the at least one expandable layer to a temperature equal to or higher than the softening point or melting point of a thermoplastic resin forming the at least one expandable layer in the insulating sheet, to expand the expandable layer to fix and insulate a conductive member. The insulating sheet, the insulating layer, and the expandable layer may be used in combination as needed.

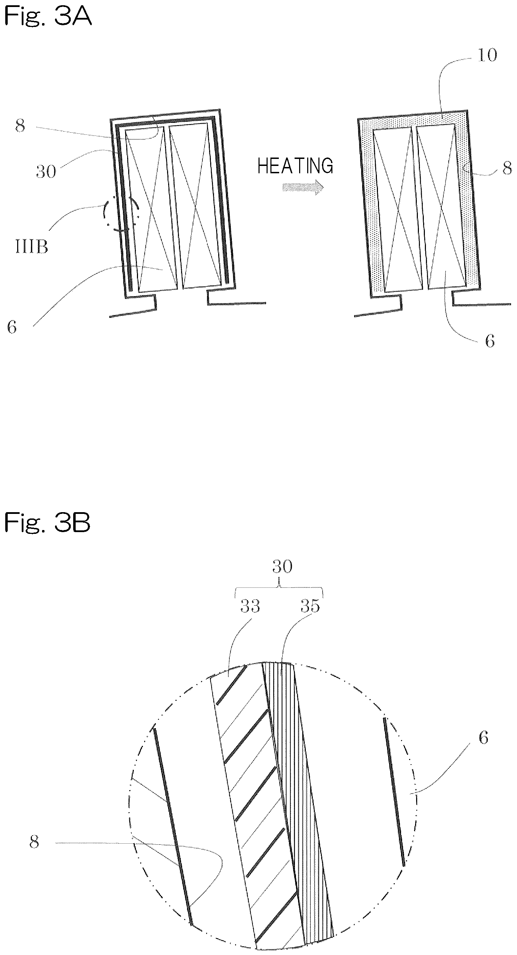

Fig. 3A is a partial schematic cross-sectional view for describing an example of a method for forming an insulating member 10 of the first embodiment of the present invention. The insulating member 10 is formed by expanding an insulating sheet 30 in the thickness direction of the insulating sheet 30. The left side of Fig. 3A shows a state where the insulating sheet 30 is inserted between the inner peripheral surface of a slot portion 8 and a coil 6, and the right side of Fig. 3A shows a state where the insulating sheet 30 has expanded by heating to become the insulating member 10, which is interposed between the inner peripheral surface of the slot portion 8 and the coil 6 to fix the coil 6. Fig. 3B is a partially enlarged schematic cross-sectional view of the schematic cross-sectional view of Fig. 3A.

Fig. 3B is a schematic enlarged view for showing the insulating sheet 30 inserted between the inner peripheral surface of the slot portion 8 and the coil 6. As shown in Fig. 3B, the insulating sheet 30 includes an insulating layer 33 and an expandable layer 35, the insulating layer 33 corresponds to the insulating layer 13 of the insulating member 10, and the expandable layer 35 corresponds to the void layer 15 of the insulating member 10.

In the expandable layer 35 of the insulating sheet 30, the reinforcing fibers in a curved state are restrained by the thermoplastic resin, and when the insulating sheet 30 is heated to a temperature equal to or higher than the melting point or softening point of a thermoplastic resin constituting the expandable layer 35, the thermoplastic resin is melted or softened, and accordingly, the bending of the reinforcing fibers restrained by the thermoplastic resin is released, whereby a repulsive force (restoring force) of the reinforcing fibers is generated in the thickness direction.

As a result, the insulating sheet 30 expands irreversibly in the thickness direction thereof, and the resultant insulating member 10 fixes the coil 6 to the slot portion 8, as shown in Fig. 1B. Preferably, the thermoplastic resin constituting the insulating member is fused to adhere to the inner peripheral surface of the slot portion 8 and the coil 6.

The insulating member of the present invention can be obtained, for example, by heating the insulating sheet of the present invention to expand the expandable layer as described above.

As another aspect, the insulating member of the present invention may be obtained by, for example, preparing an insulating layer and an expandable layer separately, inserting the layers separately into a space between conductive members, and then heating the layers so that the expandable layer is expanded to form a void layer, thereby forming an insulating member including the insulating layer and the void layer.

The insulating member may be in contact with and fix a conductive member and also insulate the conductive member. For example, an insulating sheet (e.g., ribbon-like member) may be wound around a conductive member (e.g., a conductive member for cables), the obtained wound body may be heated so that the expandable layer of the insulating sheet is expanded to form a void layer, thereby forming an insulating member including an insulating layer and the void layer and insulating the conductive member.

Alternatively, the insulating member may be in contact with and insulate a conductive member and also fix the conductive member in a predetermined space. For example, the insulating sheet may be placed adjacent to a conductive member in a predetermined space, the expandable layer of the insulating sheet may be expanded to form a void layer, so that the insulating member may be disposed in contact with the conductive member to insulate the conductive member, and also may fill the predetermined space. The manner in which the conductive member is fixed may be determined as appropriate according to the shape of the space, and the space does not have to be completely filled with the insulating member as long as the insulating member can fix the conductive member in the space by the expansion of the expandable layer. For example, the insulating member may fix the conductive member by filling the gap between the conductive member and at least one wall surface of the space.

The temperature at which the expandable layer is heated to expand may be, with reference to the softening point or melting point $T_b$ of the thermoplastic resin forming at least one expandable layer, $T_b$ or higher, preferably $(T_b + 10)$°C or higher, and more preferably $(T_b + 20)$°C or higher. The upper limit of the temperature at which the expandable layer is expanded may be equal to or lower than the thermal decomposition temperature of the thermoplastic resin forming the expandable layer.

Meanwhile, the temperature at which the expandable layer is heated to expand may be set according to the insulating layer. For example, where the insulating layer includes a thermoplastic resin, the above temperature is preferably a temperature at which the insulating layer does not flow when the expandable layer expands. In such a case, with reference to the softening point or melting point $T_i$ of the thermoplastic resin forming the insulating layer, the heating temperature may be $(T_i + 90)$°C or lower, preferably $(T_i + 80)$°C or lower, and more preferably $(T_i + 70)$°C or lower. Where a plurality of insulating layers exist, $T_i$ used as a reference may be the value of the lowest softening point or melting point among the insulating layers.

<Insulating Sheet>

The insulating sheet of the present invention includes at least one insulating layer and at least one expandable layer. The insulating layer corresponds to the insulating layer present in the insulating member. Where the insulating layer in the insulating member includes a thermosetting resin or the like, the insulating layer in the insulating sheet may include a precursor before heat curing.

<Expandable Layer>

The expandable layer includes reinforcing fibers and a thermoplastic resin. The expandable layer may include substances other than the reinforcing fibers and the thermoplastic resin as long as the effects of the present invention are not impaired. In the expandable layer, the reinforcing fibers have a plurality of intersections, and at least some of the intersections are bonded with the thermoplastic resin. For example, the reinforcing fibers may be randomly oriented to have a plurality of intersections, and at least some of the intersections may be bonded with the thermoplastic resin. Preferably, the thermoplastic resin may be present in a webbed shape around the intersections of the reinforcing fibers, or the reinforcing fibers may be embedded in the thermoplastic resin forming a matrix. By having such a structure, the structural strength of the expandable layer is improved.

In one aspect, in the expandable layer, a volume content of reinforcing fibers each having a bent ratio of 1.004 or more with respect to the volume of the total reinforcing fibers may be 20 vol% or more, the bent ratio being defined by the following formula (2).

$$\text{Bent ratio} = \text{fiber length} / \text{shortest distance between opposite ends of fiber}$$

$$(2)$$

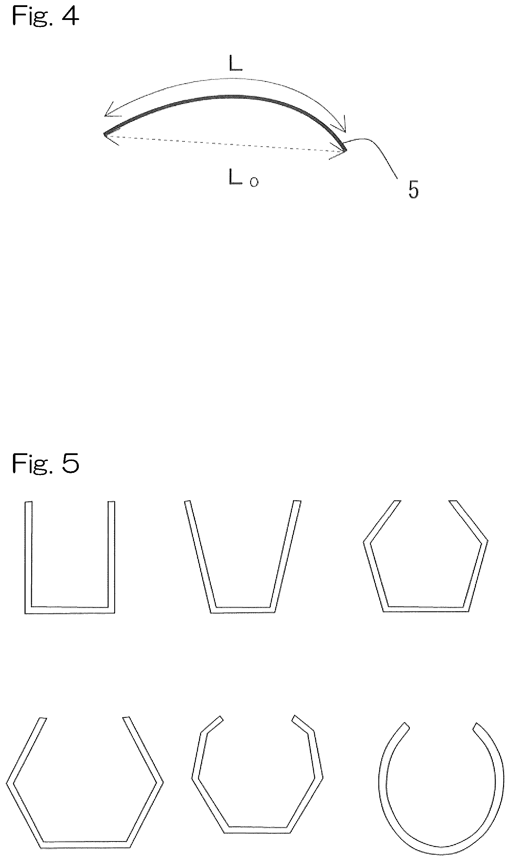

Fig. 4 is a conceptual diagram for describing the bent ratio of a reinforcing fiber. As shown in Fig. 4, it is assumed that in the expandable layer, the reinforcing fiber has an embowed shape centered substantially at a central portion. In this case, in the above formula (2), the fiber length indicates a length $L$ along the curved shape of the fiber, and the shortest distance between opposite ends of the fiber indicates a distance $L_0$ of a straight line connecting two points at opposite ends of the fiber. The shape of the curved reinforcing fiber is not limited to the embowed shape as shown in Fig. 4, and may be a chevron shape or may be a wave shape.

Due to the reinforcing fiber being curved, residual stress is generated, and when the insulating sheet is heated, the thermoplastic resin constituting the expandable layer flows. The reinforcing fibers each having a bent ratio of 1.004 or more have a large repulsive force, so that the fixation of a member to be fixed can be ensured by the repulsive force, even when the expandable layer is combined with an insulating layer for ensuring the insulating properties of the insulating member.

In the expandable layer, the volume content of the reinforcing fibers each having a bent ratio of 1.004 or more with respect to the volume of the total reinforcing fibers may be preferably 30 vol% or more, more preferably 35 vol% or more, and further preferably 40 vol% or more. The upper limit of the volume content of the reinforcing fibers each having a bent ratio of 1.004 or more with respect to the volume of the total reinforcing fibers is not particularly limited, and may be 100%, for example. The bent ratio of the reinforcing fibers is a value measured by the method described in EXAMPLES below.

Where the expandable layer is pressed in the thickness direction in producing the expandable layer as described above, the repulsive force of the curved reinforcing fibers is generated in the thickness direction, so that such an expandable layer expands in the thickness direction, and expansion stress is generated in the thickness direction.

From the viewpoint of increasing the expansion stress upon heating, the volume content of the reinforcing fibers each having a bent ratio of 1.004 or more in the expandable layer with respect to the volume of the entire expandable layer may be 3 to 50 vol%, preferably 5 to 45 vol%, and more preferably 10 to 40 vol%. The volume content of the reinforcing fibers each having a bent ratio of 1.004 or more with respect to the volume of the entire expandable layer indicates the ratio of the volume of the reinforcing fibers each having a bent ratio of 1.004 or more to the bulk volume of the expandable layer, and is a value measured by the method described in EXAMPLES below.

From the viewpoint of increasing the expansion stress upon heating, the average bent ratio of the reinforcing fibers in the expandable layer may be 1.003 or more, preferably 1.004 or more, more preferably 1.005 or more, and further preferably 1.006 or more. The upper limit of the average bent ratio of the reinforcing fibers may be, for example, 1.05 or less, preferably 1.04 or less, and more preferably 1.03 or less. The average bent ratio of the reinforcing fibers is a value measured by the method described in EXAMPLES below.

From the viewpoint of increasing the expansion stress upon heating (which refers to the stress generated when the insulating sheet expands to fix the conductive member), the weight content of the reinforcing fibers with respect to the total weight of the expandable layer may be preferably 15 to 60 wt%, more preferably 18 to 55 wt%, further preferably 20 to 50 wt%, and even more preferably 25 to 48 wt%. If the weight content of the reinforcing fibers is excessively low, the reinforcing fibers are less in contact with each other, so that it tends to be difficult for the reinforcing fibers to be curved. In addition, if the weight content of the reinforcing fibers is excessively high, the amount of the thermoplastic resin is small, so that the reinforcing fibers cannot be held in a curved state, and it tends to be difficult to adjust the bent ratio of the reinforcing fibers.

The weight content of the thermoplastic resin in the expandable layer with respect to the total weight of the expandable layer may be preferably 40 to 85 wt%, and may be more preferably 45 to 82 wt%, further preferably 50 to 80 wt%, and even more preferably 52 to 75 wt%. If the amount of the thermoplastic resin is small, the contribution of the melted thermoplastic resin to adhesion is small, so that the reinforcing force or fixing force may be insufficient. As the thermoplastic resin included in the expandable layer, a binder component used as necessary in the production of a nonwoven fabric as a composite sheet may be included.

From the viewpoint of increasing the area of the thermoplastic resin in contact with the conductive member and ensuring sufficient expandability, the volume ratio between the reinforcing fibers and the thermoplastic resin in the expandable layer (reinforcing fibers : thermoplastic resin) may be 10:90 to 70:30. The volume ratio between the reinforcing fibers and the thermoplastic resin (reinforcing fibers : thermoplastic resin) may be preferably 15:85 to 65:35 and more preferably 20:80 to 60:40.

The average basis weight of the expandable layer can be varied according to the space to be filled and the intended use, and can be, for example, selected from a wide range of 10 to 10000 g/m$^2$. The average basis weight of the expandable layer may be 10 to 500 g/m$^2$, preferably 20 to 400 g/m$^2$, and more preferably 50 to 300 g/m$^2$ from the viewpoint of being able to accurately fill even a small space. The average basis weight of the expandable layer is a value measured by the method described in EXAMPLES below.

The density of the expandable layer can be varied according to the space to be filled and the intended use, and may be 0.5 to 5 g/cm$^3$, preferably 0.6 to 4 g/cm$^3$, and more preferably 0.7 to 3 g/cm$^3$. The density of the expandable layer is a value measured by the method described in EXAMPLES below.

The expandable layer may have a release rate of the bent ratio, as defined by the following formula (3), of 20% or more, preferably 30% or more, more preferably 40% or more, further preferably 50% or more, and even more preferably 60% or more. The release rate of the bent ratio is a measure of how much ability to thermally expand the expandable layer has, and the expandable layer having the above release rate of the bent ratio has excellent strength to reinforce a predetermined space and to fix a member to be fixed when filling the space. The upper limit of the release rate of the bent ratio is not particularly limited, and may be 100%, for example.

$$\text{Release rate of bent ratio (\%)} = [(A - 1) - (B - 1)]/(A - 1) \times 100 \qquad (3)$$

(wherein A denotes the average bent ratio of the reinforcing fibers in the expandable layer before expansion, and B denotes the average bent ratio of the reinforcing fibers in the expandable layer after the expandable layer is heated to expand under no pressure.)

From the viewpoint of suppressing gas generation, the expandable layer may be preferably substantially free of volatile substances that volatilize when heated (e.g., low molecular weight compounds having a boiling point lower than heating temperature, etc.), a foaming agent, expanded graphite, etc., and the total amount of volatile substances in the expandable layer may be less than 0.5 wt%.

In a step of expanding the expandable layer (hereinafter sometimes referred to simply as expansion step), for example, with reference to the melting point or softening point (Tb) of the thermoplastic resin of the expandable layer, the heating temperature may be (Tb + 10)°C or higher, preferably (Tb + 30)°C or higher, and more preferably (Tb + 50)°C or higher. The upper limit of the heating temperature may be, for example, (Tb + 250)°C or lower and preferably (Tb + 200)°C or lower. In particular, from the viewpoint of suppressing deterioration of the thermoplastic resin, the heating temperature is more preferably (Tb + 150)°C or lower.

In the expansion step, the insulating sheet may expand quickly, or may expand slowly to have a uniform structure as a whole. For example, the heating time for expansion may be, for example, 1 minute to 1 hour, and preferably 10 to 50 minutes.

<Expandable Layer Precursor>

Such an expandable layer is formed from an expandable layer precursor. Specifically, a method for producing an expandable layer may include at least a step of preparing an expandable layer precursor including reinforcing fibers and a thermoplastic resin, a step of heating the expandable layer precursor to a temperature equal to or higher than the melting point or softening point of the thermoplastic resin and applying pressure to the expandable layer in the thickness direction thereof to perform hot pressing, and a step of cooling the expandable layer precursor to a temperature lower than the melting point or softening point of the thermoplastic resin while still applying pressure. In order to produce an expandable layer including a specific amount of reinforcing fibers each having a specific bent ratio, production conditions described later need to be adjusted as appropriate according to the basis weight, the thickness, etc., of the desired expandable layer. For example, it is possible to adjust the bent ratio of the reinforcing fibers by adjusting the proportion of the reinforcing fibers in the expandable layer precursor, the number of sheets of the expandable layer precursor to be subjected to hot pressing, the conditions of hot pressing, etc.

The expandable layer precursor includes reinforcing fibers and a thermoplastic resin, and is a material that can form the expandable layer through the hot-pressing step and the cooling step. Sheet-like members and the like in various forms can be used as the expandable layer precursor. Examples of the expandable layer precursor include a mixed nonwoven fabric of reinforcing fibers and thermoplastic fibers, a nonwoven fabric of reinforcing fibers in which a particulate (or powdery) thermoplastic resin is dispersed, etc. The expandable layer precursor may be preferably a mixed nonwoven fabric of reinforcing fibers and thermoplastic fibers. From the viewpoint of uniformity of distribution of reinforcing fibers and thermoplastic fibers, the expandable layer precursor may be more preferably a wet-laid nonwoven fabric including reinforcing fibers and thermoplastic fibers (e.g., mixed paper; hereinafter, in the present invention, a mixed nonwoven fabric produced by a wet-laid papermaking method is referred to as mixed paper).

The types of the reinforcing fibers and the thermoplastic resin are the same as the types of the reinforcing fibers and the thermoplastic resin used in the insulating member, and thus the description thereof is omitted here. The reinforcing fibers used may be continuous fibers, but are preferably noncontinuous fibers, and the average fiber length thereof is preferably 3 to 100 mm from the viewpoint of increasing the repulsive force of the reinforcing fibers. The average fiber length may be more preferably 4 to 80 mm and further preferably 5 to 50 mm. The average fiber length is a value measured by the method described in EXAMPLES below.

From the viewpoint of increasing the repulsive force of the reinforcing fibers, the average fiber diameter of single fibers of the reinforcing fibers may be preferably 2 to 40 $\mu$m. The average fiber diameter may be more preferably 3 to 30 $\mu$m and further preferably 4 to 20 $\mu$m. The average fiber diameter is a value measured by the method described in EXAMPLES below.

From the viewpoint of increasing the repulsive force of the reinforcing fibers, the aspect ratio of single fibers of the reinforcing fibers (average fiber length/average fiber diameter) may be preferably 100 to 50000. The aspect ratio may be more preferably 300 to 10000 and further preferably 500 to 5000.

From the viewpoint of increasing the repulsive force of the reinforcing fibers, the reinforcing fibers preferably may have a tensile modulus of 10 GPa or more. The tensile modulus may be more preferably 30 GPa or more and further preferably 50 GPa or more. The upper limit thereof is not particularly limited, and may be 1000 GPa or lower. The tensile modulus can be measured by a method conforming to the standard suited for each fiber, such as JIS R 7606 for carbon fibers, JIS R 3420 for glass fibers, and JIS L 1013 for organic fibers.

From the viewpoint of adjusting the bent ratio of the reinforcing fibers in the expandable layer to be obtained, the weight content of the reinforcing fibers with respect to the total weight of the expandable layer precursor may be 15 to 60 wt%, preferably 18 to 55 wt%, more preferably 20 to 50 wt%, and further preferably 25 to 48 wt%. If the content of the reinforcing fibers is excessively low, the reinforcing fibers are less in contact with each other, so that it tends to be difficult for the reinforcing fibers to be curved. In addition, if the content of the reinforcing fibers is excessively high, the amount of the thermoplastic resin is small, so that the reinforcing fibers cannot be held in a curved state, and it tends to be difficult to adjust the bent ratio of the reinforcing fibers.

When a mixed nonwoven fabric is used as the expandable layer precursor, thermoplastic fibers made from the above thermoplastic resin by a known method can be used. From the viewpoint of adjusting the bent ratio of the reinforcing fibers in the expandable layer to be obtained, the weight content of the thermoplastic fibers in the mixed nonwoven fabric used in the present invention, with respect to the total weight of the mixed nonwoven fabric, may be 40 to 85 wt%, preferably 45 to 82 wt%, more preferably 50 to 80 wt%, and further preferably 52 to 75 wt%.

From the viewpoint of good dispersibility of the reinforcing fibers, the single fiber fineness of the thermoplastic fibers may be preferably 0.1 to 20 dtex. In order to obtain an expandable layer which can produce excellent expansion stress when heated, it is preferable to disperse the reinforcing fibers in the mixed nonwoven fabric without spots. The single fiber fineness of the thermoplastic fibers may be more preferably 0.5 to 18 dtex and further preferably 1 to 16 dtex. The single fiber fineness is a value measured by the method described in EXAMPLES below.

From the viewpoint of good dispersibility of the reinforcing fibers, the average fiber length of the thermoplastic fiber may be preferably 0.5 to 60 mm and may be more preferably 1 to 55 mm and further preferably 3 to 50 mm. The average fiber length is a value measured by the method described in EXAMPLES below. The cross-sectional shape of the fibers in this case is not particularly limited, and may be circular, hollow, flat, or an atypical cross-sectional shape such as a star shape.

When fibers made of a thermoplastic resin having a glass transition temperature of 100°C or higher are used as the thermoplastic fibers, the mixed nonwoven fabric may include a binder component as necessary. The weight content of the binder component with respect to the mixed nonwoven fabric may be, for example, 10 wt% or less. The form of the binder component may be fibrous, particulate, liquid, etc. From the viewpoint of forming a nonwoven fabric, the binder component may be preferably binder fibers. The binder component is not particularly limited, examples of the binder component include polyolefin-based resins, polyamide-based resins, polyester-based resins, acrylic-based resins, polyvinyl alcohol-based resins, polyurethane-based resins, etc., and polyester-based resins are preferable. These binder components correspond to components constituting the thermoplastic resin of the obtained expandable layer. From the viewpoint that the binder component forms a part of a matrix as the thermoplastic resin, it is preferable to use a binder component having compatibility with the thermoplastic fibers, and in this case, the obtained expandable layer has excellent strength since the matrix is integrated.

The polyester-based resin may include a polyester-based polymer including a terephthalic acid component (a) and an isophthalic acid component (b) with a copolymerization ratio (mole ratio) of (a)/(b) = 100/0 to 40/60 (preferably 99/1 to 40/60) among dicarboxylic acid components. By using such a polyester-based resin, the strength of the mixed nonwoven fabric can be improved due to good binder properties, so that the process passability is excellent and thermal decomposition can be suppressed during molding at high temperatures. In addition, since such a polyester-based resin has compatibility with thermoplastic polyimide-based resins (preferably, polyetherimide-based resins), the polyester-based resin is particularly preferable as the binder component in the case where thermoplastic fibers made of a polyimide-based resin are used. More preferably, (a)/(b) = 90/10 to 45/55, and further preferably, (a)/(b) = 85/15 to 50/50.

The polyester-based resin may include a small amount (e.g., 5 mol% or less) of one or more dicarboxylic acid components other than terephthalic acid and isophthalic acid, as long as the effects of the present invention are not impaired.

As a diol component constituting the polyester-based resin, ethylene glycol can be used, but a small amount (e.g., 5 mol% or less) of one or more diol components other than ethylene glycol may be included.

A production method for the nonwoven fabric is not particularly limited, and examples of the production method include a spunlace method, a needle punch method, a steam jet method, a dry-laid papermaking method, and a wet-laid papermaking method (wet-laid process). Among them, in terms of production efficiency and uniform dispersion of the reinforcing fibers in the nonwoven fabric, a wet-laid papermaking method is preferable. For example, in a wet-laid papermaking method, an aqueous slurry containing thermoplastic fibers and reinforcing fibers may be prepared, and then the slurry may be subjected to a typical papermaking step. The aqueous slurry may contain the above binder fibers (e.g., water-soluble polymer fibers such as polyvinyl alcohol-based fibers, heat-fusible fibers such as polyester-based fibers), etc., as needed. In addition, in order to improve the uniformity and the pressure bonding property of the nonwoven fabric, the binder component may be applied by spray drying, or a hot-pressing step may be added after the wet-laid papermaking step.

When the wet-laid papermaking method is used, an aqueous slurry further containing a dispersant may be used from the viewpoint of increasing the uniformity of the thickness and the basis weight of the expandable layer to be obtained. As the dispersant, a known dispersant capable of dispersing the reinforcing fibers and the thermoplastic fibers in water can be used, and examples of the dispersant include polymer-type dispersants such as polyalkylene oxide-based dispersants, polyacrylamide-based dispersants, polyacrylic acid-based dispersants, and urethane resin-based dispersants.

From the viewpoint of increasing the uniformity of the thickness and the basis weight of the expandable layer to be obtained, an aqueous slurry further containing a thickening agent may be used. Examples of the thickening agent include anionic polyacrylamide, nonionic polyethylene oxide, etc. Among these, it is preferable to use anionic polyacrylamide as the thickening agent. This is because it is easier to obtain a mixed fiber bundle when a cationic compound is added.

The basis weight of the nonwoven fabric is not particularly limited, and may be preferably 5 to 1500 g/m². The basis weight may be more preferably 10 to 1000 g/m² and further preferably 20 to 500 g/m².

In the hot-pressing step, the expandable layer precursor may be heated to a temperature equal to or higher than the melting point or softening point of the thermoplastic resin and may be pressed in the thickness direction to perform hot pressing. By heating and pressing in the thickness direction, the reinforcing fibers are compressed in a state where the reinforcing fibers are in contact with each other, thereby allowing the reinforcing fibers to be curved. In the present invention, it is possible to adjust the bent ratio of the reinforcing fibers by adjusting the conditions of hot pressing described later according to the content ratio of the reinforcing fibers and the thermoplastic resin in the expandable layer precursor as well as the basis weight and number of sheets of the expandable layer precursor.

The method of hot pressing is not particularly limited, and common compression molding such as stampable molding, pressure molding, vacuum compression molding, and GMT molding may be suitably used. The molding temperature in this process may be set according to the softening point or melting point of the thermoplastic resin of the expandable layer precursor used. The heating temperature may be preferably equal to or higher than the melting point or softening point of the thermoplastic resin of the expandable layer precursor, and, for example, where the thermoplastic resin is crystalline, the heating temperature may be preferably in the range of equal to or higher than the melting point of the thermoplastic resin and equal to or lower than (melting point + 100) °C. In addition, where the thermoplastic resin is non-crystalline, the heating temperature may be preferably in the range of equal to or higher than the glass transition temperature of the thermoplastic resin as the softening point and equal to or lower than (glass transition temperature + 200)°C. If necessary, preheating may be performed with an IR heater or the like before hot pressing.

The pressure during hot pressing is not particularly limited, and the hot pressing is typically performed at a pressure of 0.05 MPa or higher. The pressure may be more preferably 0.1 MPa or higher and further preferably 0.5 MPa or higher. The upper limit is not particularly limited, and may be about 30 MPa. The time for hot pressing is not particularly limited. However, since the thermoplastic resin may deteriorate if exposed to high temperatures for a long time, typically, the time may be preferably within 30 minutes and may be more preferably within 25 minutes and further preferably within 20 minutes. The lower limit is not particularly limited, and may be about 1 minute.

In the hot-pressing step, one or more sheets of the above expandable layer precursor can be stacked and hot-pressed. For example, preferable conditions differ depending on the basis weight of the expandable layer precursor, the thickness of the desired expandable layer, etc., and from the viewpoint of adjusting the bent ratio of the reinforcing fibers, a multilayered body in which a plurality of sheets (e.g., 2 to 100 sheets, preferably 3 to 50 sheets) of the above expandable layer precursor are stacked may be hot-pressed.

The type of the reinforcing fibers and the pressure to be applied can be set as appropriate in order to adjust the thickness and the density of the expandable layer to be obtained. Furthermore, the shape of the expandable layer to be obtained is also not particularly limited and can be set as appropriate. Depending on the purpose, it is also possible to stack a plurality of mixed nonwoven fabrics and the like having different specifications, or separately place mixed nonwoven fabrics and the like having different specifications in a mold having a certain size, and perform hot pressing.

In the cooling step, the heated expandable layer precursor can be cooled to a temperature lower than the melting point or softening point of the thermoplastic resin while still applying pressure in the hot-pressing step to obtain an expandable layer having a predetermined shape. By cooling the heated expandable layer precursor under pressure, the state of the reinforcing fibers adjusted to a specific bent ratio in the hot-pressing step as described above can be maintained, and an expandable layer having a specific amount of reinforcing fibers each having a specific bent ratio can be obtained. In the cooling step, as in the hot-pressing step, pressure may be applied to the expandable layer precursor by using a pressing device including a pressure dispersion mechanism.

The insulating sheet may be produced by separately producing the insulating layer and the expandable layer and integrating these layers by means of fusing or utilizing an adhesive. Alternatively, the insulating layer and the expandable layer precursor may be stacked, and the expandable layer may be integrated with the insulating layer in the process of forming the expandable layer as described later, to produce the insulating sheet.

For example, where the insulating layer includes a thermoplastic resin, the insulating layer and the expandable layer may be fused and integrated in the hot-pressing step to produce the insulating sheet. In such a case, the heating temperature in the hot-pressing step may be preferably a temperature at which the thermoplastic resin forming the insulating layer does not flow excessively in the hot-pressing step. For example, where the thermoplastic resin forming the insulating layer is an amorphous resin, with reference to the softening point Ti, the heating temperature may be (Ti + 50)°C or lower, preferably (Ti + 40)°C or lower, and more preferably (Ti + 30)°C or lower. Where the thermoplastic resin forming the insulating layer is a crystalline resin, with reference to the melting point Ti, the heating temperature may be lower than Ti °C, preferably (Ti - 20)°C or lower, and more preferably (Ti - 40)°C or lower, and may be (Ti - 60)°C or higher as the lower limit. Where a plurality of insulating layers exist, Ti which is used as a reference may be the value of the lowest softening point or melting point among the insulating layers.

In the case of the insulating sheet in which the insulating layer includes a thermoplastic resin, it is preferable to, in integrating the expandable layer and the insulating layer by fusion, set the conditions of the hot-pressing step such that the thickness of the insulating sheet is increased when compared to the sum of the thickness of the insulating layer and the theoretical thickness of the expandable layer calculated from the expandable precursor.

The theoretical thickness of the expandable layer calculated from the expandable precursor can be calculated as follows.

The true density of the void layer (= volume ratio of reinforcing fibers × density of reinforcing fibers + volume ratio of thermoplastic resin × density of thermoplastic resin) is calculated. Then, the theoretical thickness can be calculated by dividing the basis weight of the expandable layer by the true density as shown in the following formula.

Theoretical thickness = basis weight of expandable layer / true density of void layer

Where the insulating layer includes a thermoplastic resin, the insulating layer may include a penetration layer at the interface with the expandable layer. The penetration layer is a layer formed by penetration of a portion of the reinforcing fibers used in the expandable layer into the insulating layer, and is formed by the thermoplastic resin in the insulating layer flowing in the hot-pressing step when forming the insulating sheet. The thickness of the penetration layer can be determined based on the distance from the interface between the insulating layer and the expandable layer to the deepest point of the penetration of the reinforcing fibers into the insulating layer.

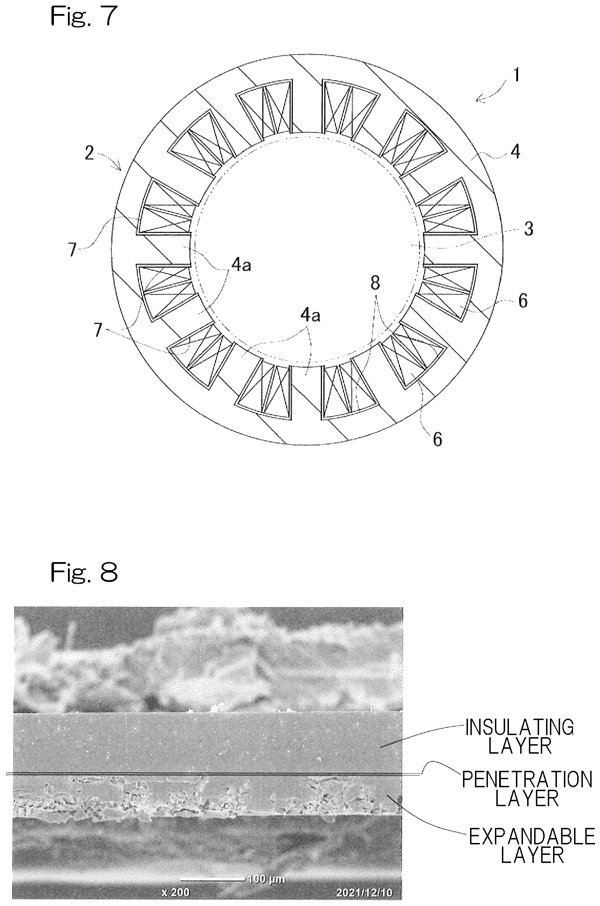

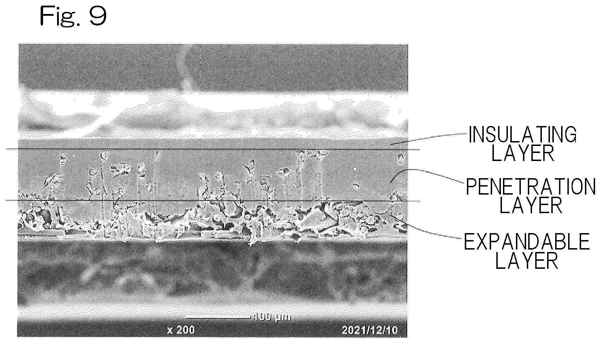

For example, Fig. 8 and Fig. 9 show enlarged photographs of cross-sections of insulating layers obtained in Example 11 and Comparative Example 5, respectively. As shown in Figs. 8 and 9, the thickness of the penetration layer can be determined based on the distance from the resin interface between the insulating layer and the expandable layer to an upper end portion of the fibers penetrating deepest into the insulating layer side. Here, the resin interface between the insulating layer and the expandable layer may be determined from the appearance of the resin, and if the resin interface cannot be clearly determined from the appearance, the upper end portion of the fibers located at the upper end of the mass of the reinforcing fibers in the expandable layer can be determined as the resin interface between the insulating layer and the expandable layer.

As the thickness of the penetration layer, the sum of the thicknesses of the penetration layers in the insulating sheet is used. The thickness of the penetration layer may be, for example, 20 $\mu$m or less and preferably 0.5 to 18 $\mu$m. Where the insulating sheet includes the penetration layer, the adhesiveness between the insulating layer, and the expandable layer and the void layer can be improved, so that the integration of the insulating sheet and the insulating member can be improved.

Since the insulating sheet can be easily folded or bent, the insulating sheet can be deformed as appropriate according to the space into which the insulating sheet is to be inserted. For example, when the insulating sheet is placed in each slot portion in a stator core, the insulating sheet may have various cross-sectional shapes as illustrated in Fig. 5.

The average thickness of the insulating sheet can be varied according to the space to be filled and the intended use, and can be, for example, selected from a wide range of 0.01 to 20 mm. The average thickness of the insulating sheet may be 10 to 1000 $\mu$m, preferably 20 to 500 $\mu$m, and more preferably 50 to 300 $\mu$m from the viewpoint of being able to insert the insulating sheet into a narrow gap and accurately fill the gap. The average thickness of the insulating sheet is a value measured by the method described in EXAMPLES below.

The basis weight of the insulating sheet can be varied according to the space to be filled and the intended use, and can be, for example, selected from a wide range of 10 to 1000 g/m$^2$. The basis weight of the insulating sheet may be 10 to 800 g/m$^2$, preferably 40 to 600 g/m$^2$, and more preferably 50 to 500 g/m$^2$ from the viewpoint of being able to insert the insulating sheet into a narrow gap and accurately fill the gap. The basis weight of the insulating sheet is a value measured by the method described in EXAMPLES below.

The density of the insulating sheet can be varied according to the space to be filled and the intended use, and can be, for example, selected from a wide range of 0.10 to 3.00 g/cm$^3$. The density of the insulating sheet may be 0.50 to 1.80 g/cm$^3$, preferably 0.65 to 1.70 g/cm$^3$, and more preferably 0.85 to 1.60 g/cm$^3$ from the viewpoint of being able to insert the insulating sheet into a narrow gap and accurately fill the gap. The density of the insulating sheet is a value measured by the method described in EXAMPLES below.

In the present invention, from the viewpoint of good mechanical strength of the insulating member after the insulating sheet expands, the expansion ratio of the insulating sheet in the thickness direction may be 101 to 400%, preferably 120 to 400%, more preferably 130 to 300%, and further preferably 140 to 250%. The expansion ratio in the thickness direction is measured under no load, and is represented by the following formula (4), based on the thickness of the insulating sheet before heating and the thickness of the expanded insulating sheet obtained by conducting an expansion test in which heating is performed until the thickness no longer changes.

Expansion ratio (%) = thickness (mm) of insulating sheet after expansion / thickness (mm) of insulating sheet before expansion $\times$ 100

(4)

The insulating sheet can expand anisotropically in the thickness direction thereof, and the rate of dimensional change due to expansion or shrinkage in a direction orthogonal to the thickness direction before and after the expansion test described above may be preferably -10 to 10%. The rate of dimensional change in the direction orthogonal to the thickness direction indicates shrinkage when the rate of dimensional change is a negative value and expansion when the rate of dimensional change is a positive value. The rate of dimensional change in the direction orthogonal to the thickness direction may be more preferably -8 to 8% and further preferably -5 to 5%. For example, it is preferable that the reinforcing fibers of the insulating sheet are oriented in the plane direction, and in the case of such a structure, the rate of dimensional change due to expansion or shrinkage in the direction orthogonal to the thickness direction can be decreased. The rate of dimensional change due to expansion or shrinkage in the direction orthogonal to the thickness direction of the insulating sheet is a value measured by the method described in EXAMPLES below.

From the viewpoint of ensuring insulating properties, the breakdown voltage of the insulating sheet after the expansion test described above may be 40 kV/mm or more, preferably 45 kV/mm or more, and more preferably 50 kV/mm or more. A higher breakdown voltage is more preferable, but the upper limit may be 300 kV/mm.

Where the target conductive member is a metal, the insulating sheet may preferably have excellent adhesiveness to the metal. The adhesiveness between the metal and the resin constituting the insulating sheet can be determined based on the difficulty in peeling the resin and the metal in the stacked state. In general, if the resin and the metal are not adhered to each other, the resin and the metal become separated at the interface therebetween, so that the adhesiveness can be determined by a known or common method as, e.g., the adhesive strength of the insulating sheet (or insulating member) to the metal.

Also, the adhesiveness may be determined as a push-out load using a jig described later. For example, the push-out load may be 5 N or more, preferably 10 N or more, more preferably 15 N or more, and further preferably 20 N or more. The upper limit of the push-out load is not particularly limited, and may be about 100 N, for example. The push-out load is a value measured by the method described in EXAMPLES below.

The insulating sheet of the present invention allows the insulating member of the present invention to be efficiently produced, and the insulating member of the present invention can be used not only for the above rotating electrical machine, but also can be widely used in various applications to insulate and fix conductive members.

Examples of such applications include cable coating materials, electrical wire coating materials, etc. For example, the insulating member of the present invention can fix and also insulate a plurality of cables or wires.

EXAMPLES

The present invention will be described in more detail below on the basis of examples, but the present invention is not limited to these examples in any manner. It should be noted that in the following Examples and Comparative Examples, various properties were evaluated in the following manner.

[Average Fiber Length]

The fiber lengths of 100 randomly selected fibers were measured, and the average of the measured values was used as an average fiber length.

[Average Fiber Diameter]

The fiber diameters of 30 randomly selected fibers were measured by microscopic observation, and the average of the measured values was used as an average fiber diameter.

[Softening Point (Glass Transition Temperature) of Thermoplastic Resin]

The glass transition temperature of a sample was determined from the temperature at a peak in temperature dependency of a loss tangent (tan$\delta$) measured at a frequency of 10 Hz and a temperature increase rate of 10°C/min using the solid dynamic viscoelasticity device "Rheospectra DVE-V4" manufactured by Rheology Co., Ltd. Here, the temperature at the peak of tan$\delta$ is the temperature at which the primary differential value of an amount of change in the value of tan$\delta$ with respect to temperature is zero. When a plurality of peak temperatures existed, the peak temperature at the higher temperature side was used as the glass transition temperature of the thermoplastic resin.

[Melting Point of Thermoplastic Resin]

The melting point of a sample was measured by raising the temperature to 350°C at a temperature increase rate of 10°C/min under a nitrogen atmosphere using "TA3000-DSC" manufactured by Mettler-Toledo International Inc., and the peak temperature of the observed melting peak was regarded as the melting point (°C).

[Content of All Reinforcing Fibers with Respect to Entire Expandable Layer]

The content of all reinforcing fibers with respect to the entire expandable layer in the insulating sheet was calculated in both volume and weight percentages with reference to JIS K 7075 "Testing methods for carbon fiber content and void content of carbon fiber reinforced plastics".

[Content of Thermoplastic Resin with Respect to Entire Expandable Layer]

The content of the thermoplastic resin was calculated as a value obtained by subtracting the content of all the reinforcing fibers from 100% representing the entire expandable layer.

[Basis Weights of Insulating Sheet, Expandable Layer Precursor, Expandable Layer, and Void Layer]

Samples of the insulating sheet, the expandable layer precursor, and the void layer each having a length of 250 mm and a width of 250 mm were prepared. Each sample was cut into 80 small pieces each having a length of 50 mm and a width of 15 mm, the weights (g) of all the small pieces were measured. The basis weights ($g/m^2$) of all the small pieces were calculated, and the average value of the basis weights of all the small pieces was used as the average basis weight ($g/m^2$) of that sample. For the void layer, the expandable layer precursor may be used, or a sample separated from the insulating layer may be used. The basis weight of the expandable layer was measured by using a sample obtained by removing the insulating layer from the insulating sheet. However, if the penetration layer was thick and difficult to remove, the basis weight of the expandable layer precursor was used.

[Thicknesses of Insulating Sheet and Insulating Member]

An insulating sheet sample having a length of 250 mm and a width of 250 mm was cut into 80 small pieces each having a length of 50 mm and a width of 15 mm. The thickness ($\mu$m) at the center of each small piece was measured using a micrometer, and the average value of the thicknesses of all the small pieces was used as an average thickness ($\mu$m). Also, for the insulating member, sample pieces cut out in the same manner were used, and the average value thereof was used as the average thickness ($\mu$m) of the insulating member.

[Thicknesses of Insulating Layer and Void Layer in Insulating Member]

A cross section of the insulating member cut in the cross-sectional direction was observed using a scanning electron microscope (JSM-5300, manufactured by JEOL Ltd.), and the thicknesses ($\mu$m) of the insulating member, and the insulating layer and the void layer in the insulating member were measured.

[Thicknesses of Insulating Layer, Penetration Layer, and Expandable Layer in Insulating Sheet]

A cross section of the insulating member cut in the cross-sectional direction was observed using a scanning electron microscope (JSM-5300, manufactured by JEOL Ltd.), and the thicknesses ($\mu$m) of the insulating sheet, and the insulating layer, the penetration layer and the expandable layer in the insulating sheet were measured.
The cut surface of the insulating sheet was observed for, of the reinforcing fibers used in the expandable layer, the reinforcing fibers penetrating into the interior in the insulating layer by being integrated with the insulating layer by hot pressing, and the thickness of the penetration layer was determined as the distance from the interface between the insulating layer and the expandable layer to the deepest point of the penetration of the reinforcing fibers into the insulating layer.

[Density of Insulating Sheet]

An insulating sheet sample cut to have a length of 50 mm and a width of 15 mm was prepared. The thickness (cm) and the weight (g) of the sample were measured. The density of the insulating sheet was calculated using the following formula.

$$\text{Density (g/cm}^3\text{)} = \text{weight (g) / (thickness (cm)} \times 7.5 \text{ (cm}^2\text{))}$$

[Density of Expandable Layer]

The density (g/cm$^3$) of the expandable layer was calculated as: basis weight (g/m$^2$) / thickness ($\mu$m) of expandable layer.

[Bent Ratio]

An insulating sheet sample cut into a piece having a length of 50 mm and a width of 15 mm was prepared. The bent ratio was measured by performing X-ray CT measurement under the following conditions, and analyzing the obtained images by the following procedure.

<Conditions of X-ray CT Measurement>

Measurement device: Xradia 520 Versa (manufactured by Carl Zeiss Co., Ltd.)

X-ray target: tungsten
X-ray tube voltage: 100 kV
Output: 9 W
Objective lens: 4X
Pixel size: 1 $\mu$m/pixel
Binning: 1
Number of captured images: 3201
Exposure time: 6 sec/one image

<Conditions of Image Analysis>

Image analysis software: Avizo (manufactured by Thermo Fisher Scientific Inc.)
The three-dimensional images of the insulating sheet sample obtained by the X-ray CT measurement were cut into a size of 0.40 mm × 0.40 mm × total thickness on the image analysis software, and then noise was removed by using a non-local filter function as appropriate. The non-local filter function was set to the following conditions.

Spatial standard deviation value: 5
Intensity standard deviation value: 0.2
Search window value: 10
Local neighborhood value: 3

Then, binarization was performed by using an interactive thresholding function, and all fibers were extracted.
Fibers having diameters conforming to the following setting conditions were extracted using a fiber tracing function for data obtained by cutting the images into a size of 0.40 mm × 0.40 mm × total thickness or data from which noise had been removed through the non-local filter process.
Cylinder length value in cylinder correlation: an arbitrary value between 2.5 and 3.5 times the fiber diameter

Angular sampling value: 5
Mask cylinder radius value: an arbitrary value between fiber radius + 1 and fiber radius + 13
Outer cylinder radius value: a fiber radius
Inner cylinder radius value: 0
Direction coefficient value of trace correlation lines: 0.1 to 0.5
Minimum distance value: an arbitrary value between the fiber radius and the fiber diameter
"Tortuosity" of each extracted fiber was defined as a bent ratio. The volume content (vol%) of the reinforcing fibers each having a bent ratio of 1.004 or more, with respect to the volume of all extracted reinforcing fibers, was calculated. This volume content was used as the "Proportion of fibers each having bent ratio of 1.004 or more in reinforcing fibers" in Tables 1 and 3.

The volume content (vol%) of the reinforcing fibers each having a bent ratio of 1.004 or more, with respect to the volume of the entire insulating sheet, was calculated by multiplying the volume content of all the reinforcing fibers with respect to the volume of the entire expandable layer in the insulating sheet, which was calculated with reference to JIS K 7075 "Testing methods for carbon fiber content and void content of carbon fiber reinforced plastics", by the volume content of the reinforcing fibers each having a bent ratio of 1.004 or more with respect to the volume of all the reinforcing fibers. This volume content was used as the volume content of the reinforcing fibers each having a bent ratio of 1.004 or more with respect to the volume of the entire expandable layer in the insulating sheet, that is, the "Proportion of fibers each having bent ratio of 1.004 or more in expandable layer" in Tables 1 and 3.

The average bent ratio was calculated by the following formula using the obtained data of the bent ratios of the fibers.

Average bent ratio = sum of bent ratios of respective extracted fibers / number of extracted fibers

[Expandability Evaluation]

Insulating sheets obtained in Examples and Comparative Examples were placed in a forced convection oven ("DN411H", manufactured by Yamato Scientific Co., Ltd.) set at a predetermined temperature equal to or higher than the softening point of the thermoplastic resin, were heated under no load for 10 minutes, and then were taken out therefrom to be cooled to 25°C. Then, the average thickness of each sample after expansion was measured, and the maximum expansion ratio (%) was determined from the average thicknesses of the sample before and after heating, using the following formula.

Maximum expansion ratio (%) = average thickness ($\mu$m) of insulating member after expansion / average thickness ($\mu$m) of insulating sheet before expansion $\times$ 100

[Rate of Dimensional Change in Direction Orthogonal to Thickness Direction]

For each sample after expansion used to measure the expansion ratio under no load, the dimensions in the plane direction were measured, and the rate of dimensional change was calculated using the following formula.

Rate of dimensional change (%) = (area ($cm^2$) after expansion - area ($cm^2$) before expansion) / area ($cm^2$) before expansion $\times$ 100

[Release Rate of Bent Ratio]

An average bent ratio Y of the reinforcing fibers in the sample after expansion was calculated by the same calculation method as for the average bent ratio of the reinforcing fibers in the insulating sheet described above, and the release rate of the bent ratio (%) was calculated using the following formula.

$$\text{Release rate of bent ratio } (\%) = [(A - 1) - (B - 1)] / (A - 1) \times 100$$

(wherein A: the average bent ratio of the reinforcing fibers in the insulating sheet before expansion, B: the average bent ratio of the reinforcing fibers in the insulating sheet after expansion.)

[Push-Out Load]

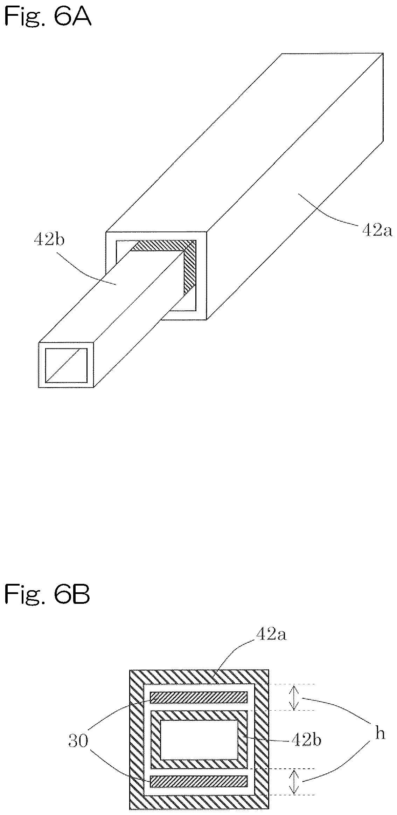

Samples for push-out load test were produced by the following procedure. Fig. 6A is a schematic perspective view for describing the production of a sample for push-out load test, and Fig. 6B is a schematic cross-sectional view for describing the production of the sample for push-out load test.

(1) The insulating sheets obtained in the Examples and the Comparative Examples were each cut into a shape having a length of 50 mm and a width of 15 mm to produce an insulating sheet sample.
(2) A hollow square member (large) 42a having a height of 20 mm, a width of 20 mm, a thickness of 2.15 mm, and a length of 100 mm and a hollow square member (small) 42b having a width of 15 mm, a thickness of 1.5 mm, and a length of 100 mm were prepared. Here, the hollow square member (small) 42b was prepared in each of the Examples and the Comparative Examples as a hollow square member (small) having such a vertical dimension that the gap having a predetermined height is left between the inner lateral surface of the hollow square member (large) 42a and the outer lateral surface of the hollow square member (small) 42b when the hollow square member (small) 42b was inserted into the hollow square member (large) 42a. That is, the vertical dimension of the hollow square member (small) 42b was adjusted to be a value of (internal vertical dimension of hollow square member (large) 42a (i.e., 15.7 mm) - gap height h $\times$ 2).

(3) With the hollow square member (small) 42b inserted into the hollow square member (large) 42a by 50 mm in the length direction as shown in Fig. 6A, one insulating sheet sample 30 was inserted into each of two locations in the gap between the inner lateral surface of the hollow square member (large) 42a and the outer lateral surface of the hollow square member (small) 42b as shown in Fig. 6B. The assembly was placed in a forced convection oven ("DN411H", manufactured by Yamato Scientific Co., Ltd.) set at 280°C, was heated for 20 minutes, and was taken out therefrom to be cooled to 25°C, thereby expanding the expandable layer in the insulating sheet to fix the hollow square member (small) 42b.

For each of the obtained samples for push-out load test, using a universal testing machine ("AG-2000A", manufactured by SHIMADZU CORPORATION), a load was applied to only the hollow square member (small) at a compression speed of 2 mm/min in the length direction to push out the hollow square member (small), and the load when the hollow square member (small) began to move was used as a push-out load (N).

[Expansion Ratio after Filling]

An expansion ratio after filling (%) was calculated using the following formula. In the case where all gap heights are filled and the gap is completely filled, the average thickness of the insulating member after filling is the same as each gap height.

Expansion ratio after filling (%) = average thickness ($\mu$m) of insulating member after filling / average thickness ($\mu$m) of insulating sheet $\times$ 100

[Porosity after Filling]

In the insulating member, the thicknesses of the insulating layer and the void layer were measured by cross-sectional observation. The bulk density (g/cm$^3$) of the void layer was calculated by dividing the basis weight (g/m$^2$) of the void layer by the thickness ($\mu$m) of the void layer.

Next, the true density of the void layer (= volume ratio of reinforcing fibers $\times$ density of reinforcing fibers + volume ratio of thermoplastic resin $\times$ density of thermoplastic resin) was calculated. Then, the porosity was calculated from the following formula.

Porosity (%) = (1 - bulk density of void layer / true density of void layer) $\times$ 100

[Porosity]

In the insulating member, the thicknesses of the insulating layer and the void layer were measured by cross-sectional observation. The bulk density (g/cm$^3$) of the void layer was calculated by dividing the basis weight (g/m$^2$) of the void layer by the thickness ($\mu$m) of the void layer.

Next, the true density of the void layer (= volume ratio of reinforcing fibers $\times$ density of reinforcing fibers + volume ratio of thermoplastic resin $\times$ density of thermoplastic resin) was calculated. Then, the porosity was calculated from the following formula.

Porosity (%) = (1 - bulk density of void layer / true density of void layer) $\times$ 100

In calculating the true density of the void layer, the specific gravity of the void layer separated from the insulating layer of the insulating member, measured using a specific gravity meter, may be used as the true density.

[Breakdown Voltage]

The breakdown voltage (kV) of each sample expanded under no load was measured with reference to JIS C 2110 "Solid electrical insulating materials - Test methods for electric strength -". In addition, the value was divided by the thickness of the sample to calculate the breakdown voltage per thickness (kV/mm).

[Retention Rate of E' of Insulating Layer Before and After Expansion]

For E' of the thermoplastic resin forming the insulating layer, the temperature dependence of a storage modulus (E') was measured using the dynamic viscoelasticity device "EPLEXOR" at a frequency of 1 Hz and a temperature increase rate of 2°C/min, and the values of E' at the room temperature (25°C) and at the softening point (Tg) of the resin of the void layer were read, to calculate a retention rate.

Retention rate (%) = E'$_{Tg}$ (at softening temperature of resin of void layer) / E'$_{25}$ (at room temperature) $\times$ 100

[Reference Example 1] (Production of Polyetherimide Fibers)

A polyetherimide (hereinafter sometimes referred to as PEI)-based polymer ("ULTEM9001", manufactured by SABIC Innovative Plastics) was vacuum dried at 150°C for 12 hours. The PEI-based polymer was discharged from a round hole nozzle at a spinning head temperature of 390°C, a spinning speed of 1500 m/min, and a discharge rate of 50 g/min to produce multifilaments of PEI fibers having 2640 dtex/1200 f. The obtained multifilaments were cut to 15 mm to produce short-cut fibers of the PEI fibers. The appearance of the obtained fibers was good without fluff, etc., the single fiber fineness was 2.2 dtex, the average fiber length was 15.0 mm, the glass transition temperature (or softening point in the case of amorphous thermoplastic resin) was 217°C, and the density was 1.27 g/cm$^3$.

[Reference Example 2] (Production of PET-Based Binder Fibers)

A polycondensation reaction was carried out at 280°C by a usual method using a polymerization reaction device to produce a PET-based polymer having an intrinsic viscosity ($\eta$) of 0.81 and including terephthalic acid and isophthalic acid at a copolymerization ratio (mole ratio) of 70/30 as a dicarboxylic acid component and 100 mol% of ethylene glycol as a diol component. The obtained polymer was extruded from the bottom of the polymerization device into water in the form of strands and was cut into pellets. The obtained PET-based polymer was fed into a co-rotating vented twin-screw extruder heated at 270°C, was guided to a spinning head heated to 280°C after a residence time of 2 minutes, was discharged from a round hole nozzle at a discharge rate of 45 g/min, and was taken up at a spinning speed of 1200 m/min to produce multifilaments made of the PET-based polymer and having 2640 dtex/1200 f. The obtained fibers were then cut to 5 mm. The appearance of the obtained fibers was good without fluff, etc., and the single fiber fineness was 2.2 dtex, the average fiber length was 5 mm, and the density was 1.38 g/cm$^3$.

[Reference Example 3] (Production of Polycarbonate Fibers)

A polycarbonate (hereinafter sometimes referred to as PC)-based polymer ("IUPILON S-3000", manufactured by Mitsubishi Engineering-Plastics Corporation), which is an amorphous resin, was vacuum dried at 120°C for 6 hours. The PC-based polymer was discharged from a round hole nozzle at a spinning head temperature of 300 °C, a spinning speed of 1500 m/min, and a discharge rate of 50 g/min to produce multifilaments of PC fibers having 2640 dtex/1200 f. The obtained multifilaments were cut to 15 mm to produce short-cut fibers of the PC fibers. The appearance of the obtained fibers was good without fluff, etc., the single fiber fineness was 2.2 dtex, the average fiber length was 15.0 mm, the glass transition temperature (or softening point in the case of amorphous thermoplastic resin) was 150°C, and the specific gravity was 1.2 g/cm$^3$.

[Reference Example 4] (Production of Polypropylene Fibers)

A polypropylene polymer ("Y-2005GP", manufactured by Prime Polymer Co., Ltd., hereinafter sometimes referred to as PP; melting point: 161°C) was vacuum dried at 50°C for 12 hours. The polymer was discharged from a round hole nozzle at a spinning head temperature of 240°C, a spinning speed of 400 m/min, and a discharge rate of 24 g/min to produce multifilaments of PP fibers having 146 dtex/24 f. The obtained multifilaments were cut to 15 mm to produce short-cut fibers of the PP fibers. The appearance of the obtained fibers was good without fluff, etc., the single fiber fineness was 6.1 dtex, the average fiber length was 15.0 mm, the melting point was 165°C, and the specific gravity was 0.9 g/cm$^3$.

[Reference Example 5] (Production of Aliphatic Polyamide Fibers)

A polyamide 6-based polymer ("UBE Nylon 1015B", manufactured by Ube Industries, Ltd., hereinafter sometimes referred to as PA6; melting point: 225°C), which is a crystalline thermoplastic resin, was vacuum dried at 80°C for 12 hours. The polymer was discharged from a round hole nozzle at a spinning head temperature of 290°C, a spinning speed of 3000 m/min, and a discharge rate of 50 g/min to produce multifilaments of PA6 fibers having 2640 dtex/1200 f. The obtained multifilaments were cut to 15 mm to produce short-cut fibers of the PA6 fibers. The appearance of the obtained fibers was good without fluff, etc., the single fiber fineness was 2.2 dtex, the average fiber length was 15.0 mm, the melting point was 225°C, and the specific gravity was 1.14 $g/cm^3$.

[Reference Example 6] (Preparation of Thickening Agent)

A thickening agent was prepared by adding 2 g of PAMOL (manufactured by MEISEI CHEMICAL WORKS, LTD.) to 2 L of water and stirring the solution until PAMOL was completely dissolved.

[Reference Example 7] (Preparation of Dispersants)

Dispersants were prepared by dissolving 3.75 g of ALKOX CP-B1 (manufactured by MEISEI CHEMICAL WORKS, LTD.) in 2 L of water and by dissolving 3.75 g of PULSET HA (manufactured by MEISEI CHEMICAL WORKS, LTD.) in 2 L of water, respectively. When used, 20 mL of each dispersant was added to a slurry.

[Example 1]

(Production of Expandable Layer)

A slurry was prepared by putting 50 wt% of PEI fibers as thermoplastic fibers, 45 wt% of glass fibers having a cut length of 13 mm (manufactured by Nippon Electric Glass Co., Ltd., average fiber diameter: 10.5 $\mu$m, specific gravity: 2.54 $g/cm^3$) as reinforcing fibers, and 5 wt% of PET-based binder fibers as binder fibers into 1.5 L of water and 40 mL of the dispersants, and stirring the mixture at 540 rpm, 1500 times using a disentangler. To the obtained slurry, 60 to 80 mL of the thickening agent was added, and an expandable layer precursor having a basis weight of 35 $g/m^2$ was obtained by a wet-laid process.

(Production of Insulating Sheet)

Each sheet of the obtained expandable layer precursor was stacked with a commercially available PEI film (SUPERIO UT Type F, manufactured by Mitsubishi Chemical Corporation, thickness: 100 $\mu$m, softening point (Ti): 217°C) as an insulating layer to have a configuration of expandable precursor/PEI film/expandable precursor, and the stacked body was heated at 240°C for 5 minutes while being pressed at 5 MPa in the stacking direction using a test press machine ("KVHC-11", manufactured by Kitagawa Seiki Co., Ltd.) to be thermocompression bonded, and then was cooled to room temperature while the pressing was maintained, to produce an insulating sheet. The thickness of the obtained insulating sheet was 148 $\mu$m.

(Production of Insulating Member)

The obtained insulating sheet was placed in a forced convection oven ("DN411H", manufactured by Yamato Scientific Co., Ltd.) set at 260°C, which is equal to or higher than the softening point of the thermoplastic resin, was heated for 10 minutes, then was taken out therefrom, and was cooled to 25°C to obtain an insulating member. The thickness of the obtained insulating member was 219 $\mu$m.

Various evaluations were made for the obtained insulating member, and the evaluation results are shown in Tables 1 and 2. The set temperature of the forced convection oven in the expandability evaluation was 260°C, the set temperature of the forced convection oven during production of a sample for push-out load test was 280°C, and a gap height h of the sample for push-out load test was 200 $\mu$m.

[Example 2]

An insulating member was obtained in the same manner as in Example 1, except that a commercially available liquid crystal polyester film (Vecstar CTF, manufactured by Kuraray Co., Ltd., thickness: 100 $\mu$m, melting point (Ti): 280°C) was used as the insulating layer in the process of producing an insulating sheet. The thickness of the obtained insulating sheet was 158 $\mu$m, and the thickness of the insulating member was 249 $\mu$m.

The obtained insulating member was evaluated in the same manner as in Example 1, and the evaluation results are shown in Tables 1 and 2.

[Example 3]

An insulating member was obtained in the same manner as in Example 1, except that carbon fibers having a cut length of 13 mm (manufactured by Toho Tenax Co., Ltd.: average fiber diameter: 7 $\mu$m, specific gravity: 1.82 g/cm$^3$) were used instead of the glass fibers in the process of producing an expandable precursor. The thickness of the obtained insulating sheet was 151 $\mu$m, and the thickness of the insulating member was 239 $\mu$m.

The obtained insulating member was evaluated in the same manner as in Example 1, and the evaluation results are shown in Tables 1 and 2

[Example 4]

An insulating sheet was obtained in the same manner as in Example 1, except that PC fibers were used as the thermoplastic fibers in the process of producing an expandable precursor. The thickness of the obtained insulating sheet was 156 $\mu$m. Then, the obtained insulating sheet was placed in a forced convection oven ("DN411H", manufactured by Yamato Scientific Co., Ltd.) set at 190°C, which is equal to or higher than the softening point of the thermoplastic resin, was heated for 10 minutes, then was taken out therefrom, and was cooled to 25°C to obtain an insulating member. The thickness of the obtained insulating member was 230 $\mu$m.

The obtained insulating member was evaluated in the same manner as in Example 1, and the evaluation results are shown in Tables 1 and 2. The set temperature of the forced convection oven in the expandability evaluation was 190°C, the set temperature of the forced convection oven during production of a sample for push-out load test was 210°C, and a gap height h of the sample for push-out load test was 200 $\mu$m.

[Example 5]

A slurry was prepared by putting 50 wt% of PEI fibers as thermoplastic fibers, 45 wt% of glass fibers having a cut length of 13 mm (manufactured by Nippon Electric Glass Co., Ltd., average fiber diameter: 10.5 $\mu$m, specific gravity: 2.54 g/cm$^3$) as reinforcing fibers, and 5 wt% of PET-based binder fibers as binder fibers into 1.5 L of water and 40 mL of the dispersants, and stirring the mixture at 540 rpm, 1500 times using a disentangler. To the obtained slurry, 60 to 80 mL of the thickening agent was added, and an expandable layer precursor having a basis weight of 80 g/m$^2$ was obtained by a wet-laid process.

The obtained mixed nonwoven fabric was heated as a single layer at 240°C for 10 minutes, while being pressed at 5 MPa in the thickness direction of the nonwoven fabric, using a test press machine ("KVHC-II", manufactured by Kitagawa Seiki Co., Ltd.) to impregnate the interstices between the glass fibers with the melted PEI-based polymer and PET-based polymer. Then, while the pressing was maintained, the fabric was cooled to 150°C, which is equal to or lower than the glass transition temperature of the PEI-based polymer, to produce an expandable layer. The obtained expandable layer had an average thickness of 53 $\mu$m, an average basis weight of 80.2 g/m$^2$, and a density of 1.51 g/cm$^3$.

An insulating sheet (i.e., a stacked body of expandable layer/PEI film) and an insulating member were obtained in the same manner as Example 1, except that the obtained expandable layer was stacked with a commercially available PEI film (SUPERIO UI Type F, manufactured by Mitsubishi Chemical Corporation, thickness: 100 $\mu$m, softening point (Ti): 217°C) as an insulating layer to have a configuration of expandable layer/PEI film. The thickness of the obtained insulating sheet was 153 $\mu$m, and the thickness of the insulating member was 286 $\mu$m.

The obtained insulating member was evaluated in the same manner as in Example 1, and the evaluation results are shown in Tables 1 and 2.

[Example 6]

An insulating sheet was obtained in the same manner as Example 1, except that an expandable precursor having a basis weight of 80 g/m$^2$ was produced in the process of producing an expandable precursor. The thickness of the obtained insulating sheet was 226 $\mu$m, and the thickness of the insulating member was 439 $\mu$m.

The obtained insulating member was evaluated in the same manner as in Example 1, except that the gap height h of the sample for push-out load test was 240 $\mu$m, and the evaluation results are shown in Tables 3 and 4.

Void layer porosity/insulating layer thickness (Y/X) was evaluated based on the value for the sample for push-out load test. For breakdown voltage, however, since it was difficult to measure the breakdown voltage of the sample for push-out load test after expansion, breakdown charge of the sample expanded under no load was evaluated. The same applies to Examples 7 to 14.

[Example 7]

An insulating member was obtained in the same manner as Example 1, except that a commercially available PEI film (SUPERIO UT Type F, manufactured by Mitsubishi Chemical Corporation, thickness: 50 μm, softening point (Ti): 217°C) was used as the insulating layer in the process of producing an insulating sheet. The thickness of the obtained insulating sheet was 158 μm, and the thickness of the insulating member was 249 μm.
The obtained insulating member was evaluated in the same manner as in Example 1, and the evaluation results are shown in Tables 3 and 4.

[Example 8]

An insulating sheet was obtained in the same manner as Example 1, except that a commercially available PEI film (SUPERIO UT Type F, manufactured by Mitsubishi Chemical Corporation, thickness: 200 μm, softening point (Ti): 217°C) was used as the insulating layer in the process of producing an insulating sheet. The thickness of the obtained insulating sheet was 245 μm, and the thickness of the insulating member was 335 μm.
The obtained insulating member was evaluated in the same manner as in Example 1, except that the gap height h of the sample for push-out load test was 250 μm, and the evaluation results are shown in Tables 3 and 4.

[Example 9]

An insulating sheet was obtained in the same manner as Example 1, except that a commercially available PEI film (SUPERIO UT Type F, manufactured by Mitsubishi Chemical Corporation, thickness: 20 μm, softening point (Ti): 217°C) was used as the insulating layer in the process of producing an insulating sheet. The thickness of the obtained insulating sheet was 71 μm, and the thickness of the insulating member was 124 μm.
The obtained insulating member was evaluated in the same manner as in Example 1, except that the gap height h of the sample for push-out load test was 100 μm, and the evaluation results are shown in Tables 3 and 4.

[Example 10]

(Production of Insulating Layer)

In the process of producing an insulating sheet, a commercially available PEI film (SUPERIO UT Type F, manufactured by Mitsubishi Chemical Corporation, thickness: 50 μm, softening point (Ti): 217°C) and a glass fiber woven fabric (manufactured by UNITIKA LTD., corresponding to IPC standard 1037) were stacked in the order of PEI film/glass fiber woven fabric/PEI film, and the stacked body was heated at 300°C for 1 minute while being pressed at 1.5 MPa in the stacking direction using a test press machine ("KVHC-II", manufactured by Kitagawa Seiki Co., Ltd.) to be thermocompression bonded, and then was cooled to room temperature while the pressing was maintained, to produce an insulating layer. The thickness of the obtained insulating layer was 98 μm.

(Production of Insulating Sheet)

Then, an insulating sheet was obtained in the same manner as in Example 1. The thickness of the obtained insulating sheet was 144 μm, and the thickness of the insulating member was 208 μm.
The obtained insulating member was evaluated in the same manner as in Example 1, and the evaluation results are shown in Tables 3 and 4.

[Example 11]

A slurry was prepared by putting 50 wt% of PEI fibers as thermoplastic fibers, 45 wt% of glass fibers having a cut length of 13 mm (manufactured by Nippon Electric Glass Co., Ltd., average fiber diameter: 10.5 μm, specific gravity: 2.54 g/cm$^3$) as reinforcing fibers, and 5 wt% of PET-based binder fibers as binder fibers into 1.5 L of water and 40 mL of the dispersants, and stirring the mixture at 540 rpm, 1500 times using a disentangler. To the obtained slurry, 60 to 80 mL of the thickening agent was added, and an expandable layer precursor having a basis weight of 35 g/m$^2$ was obtained by a wet-laid process.
The obtained mixed nonwoven fabric was heated as a single layer at 240°C for 10 minutes, while being pressed at 5 MPa in the thickness direction of the nonwoven fabric, using a test press machine ("KVHC-II", manufactured by Kitagawa Seiki Co., Ltd.) to impregnate the interstices between the glass fibers with the melted PEI-based polymer and PET-based polymer. Then, while the pressing was maintained, the fabric was cooled to 150°C, which is equal to or lower than the glass transition temperature of the PEI-based polymer, to produce an expandable layer. The obtained expandable layer had an average thickness of 53 $\mu$m, an average basis weight of 80.2 g/m$^2$, and a density of 1.51 g/cm$^3$.

The obtained expandable layer was stacked with a commercially available liquid crystal polyester film (Vecstar CTF, manufactured by Kuraray Co., Ltd., thickness: 100 $\mu$m, melting point (Ti): 280°C) as an insulating layer to have a configuration of expandable layer/LCP film/expandable layer, and the stacked body was heated at 240°C for 5 minutes while being pressed at 5 MPa in the stacking direction using a test press machine ("KVHC-II", manufactured by Kitagawa Seiki Co., Ltd.) to be thermocompression bonded, and then was cooled to room temperature while the pressing was maintained, to produce an insulating sheet. The thickness of the obtained insulating sheet was 151 $\mu$m. Then, an insulating member was produced in the same manner as in Example 1. The thickness of the obtained insulating member was 181 $\mu$m.

The obtained insulating member was evaluated in the same manner as in Example 1, and the evaluation results are shown in Tables 3 and 4.

[Example 12]

An insulating sheet and an insulating member were produced in the same manner as in Example 11, except that the obtained expandable layer was heated at 260°C for 5 minutes to be thermocompression bonded. The thickness of the obtained insulating sheet was 148 $\mu$m, and the thickness of the insulating member was 166 $\mu$m.

The obtained insulating member was evaluated in the same manner as in Example 1, and the evaluation results are shown in Tables 3 and 4.

[Example 13]

An insulating sheet was obtained in the same manner as in Example 2, except that PP fibers were used as the thermoplastic fibers in the process of producing an expandable precursor. The thickness of the obtained insulating sheet was 149 $\mu$m. Then, the obtained insulating sheet was placed into a forced convection oven ("DN411H", manufactured by Yamato Scientific Co., Ltd.) set at 190°C, which is equal to or higher than the melting point (Tb: 161°C) of the thermoplastic resin constituting the expandable layer, was heated for 10 minutes, then was taken out therefrom, and was cooled to 25°C to obtain an insulating member. The thickness of the obtained insulating member was 203 $\mu$m.

The obtained insulating member was evaluated in the same manner as in Example 1, and the evaluation results are shown in Tables 3 and 4.

[Example 14]

An insulating sheet was obtained in the same manner as in Example 2, except that PA6 fibers were used as the thermoplastic fibers in the process of producing an expandable precursor. The thickness of the obtained insulating sheet was 145 $\mu$m. Then, the obtained insulating sheet was placed into a forced convection oven ("DN411H", manufactured by Yamato Scientific Co., Ltd.) set at 260°C, which is equal to or higher than the melting point (Tb: 225°C) of the thermoplastic resin constituting the expandable layer, was heated for 10 minutes, then was taken out therefrom, and was cooled to 25°C to obtain an insulating member. The thickness of the obtained insulating member was 222 $\mu$m.

The obtained insulating member was evaluated in the same manner as in Example 1, and the evaluation results are shown in Tables 3 and 4.

[Comparative Example 1]

An insulating sheet was obtained by using only a commercially available PEI film (SUPERIO UI Type F, manufactured by Mitsubishi Chemical Corporation, thickness: 100 $\mu$m, softening point (Ti): 217°C).

Evaluations were made in the same manner as in Example 1, and the evaluation results are shown in Tables 1 and 2.

[Comparative Example 2]

A slurry was prepared by putting 50 wt% of PEI fibers as thermoplastic fibers, 45 wt% of glass fibers having a cut length of 13 mm (manufactured by Nippon Electric Glass Co., Ltd., average fiber diameter: 10.5 $\mu$m, specific gravity: 2.54 g/cm$^3$) as reinforcing fibers, and 5 wt% of PET-based binder fibers as binder fibers into 1.5 L of water and 40 mL of the dispersants, and stirring the mixture at 540 rpm, 1500 times using a disentangler. To the obtained slurry, 60 to 80 mL of the thickening agent was added, and an expandable layer precursor having a basis weight of 80 g/m$^2$ was obtained by a wet-laid process.

Three sheets of the obtained mixed nonwoven fabric were stacked, and the stacked body was heated at 240°C for 10 minutes, while being pressed at 5 MPa in the stacking direction, using a test press machine ("KVHC-II", manufactured by Kitagawa Seiki Co., Ltd.) to impregnate the interstices between the glass fibers with the melted PEI-based polymer and PET-based polymer. Then, while the pressing was maintained, the fabric was cooled to 150°C, which is equal to or lower than the glass transition temperature of the PEI-based polymer, to produce an insulating sheet. The average thickness of the obtained expandable layer was 176 $\mu$m.

The obtained insulating sheet was placed into a forced convection oven ("DN411H", manufactured by Yamato Scientific Co., Ltd.) set at a predetermined temperature equal to or higher than the softening point of the thermoplastic resin, was heated for 10 minutes, then was taken out therefrom, and was cooled to 25°C to obtain an insulating member. The thickness of the insulating member was 709 $\mu$m.

Evaluations were made in the same manner as in Example 1, and the evaluation results are shown in Tables 1 and 2

[Comparative Example 3]

An expandable layer precursor was obtained in the same manner as in Example 1, except that the expandable layer precursor had a basis weight of 80 g/m$^2$.

Each sheet of the obtained expandable layer precursor was stacked with a commercially available liquid crystal polyester film (Vecstar CTF, manufactured by Kuraray Co., Ltd., thickness: 100 $\mu$m, melting point (Ti): 280°C) as an insulating layer to have a configuration of expandable precursor/film, and the stacked body was heated at 300°C for 5 minutes while being pressed at 5 MPa in the stacking direction using a test press machine ("KVHC-II", manufactured by Kitagawa Seiki Co., Ltd.) to be thermocompression bonded, and then was cooled to room temperature while the pressing was maintained, to produce an insulating sheet. The thickness of the obtained insulating sheet was 165 $\mu$m, and the thickness of the insulating member was 182 $\mu$m.

The obtained insulating member was evaluated in the same manner as in Example 1, and the evaluation results are shown in Tables 1 and 2. Although the gap height h of the sample for push-out load test was 200 $\mu$m as in Example 1, the gap could not be filled, so that the push-out load test was not conducted.

[Comparative Example 4]

An insulating sheet was produced in the same manner as in Comparative Example 3, except that a commercially available PEI film (SUPERIO UT Type F, manufactured by Mitsubishi Chemical Corporation, thickness: 100 $\mu$m, softening point (Ti): 217°C) was used as the insulating layer. The thickness of the obtained insulating sheet was 154 $\mu$m, and the thickness of the insulating member was 182 $\mu$m.

The obtained insulating member was evaluated in the same manner as in Example 1, and the evaluation results are shown in Tables 1 and 2. Although the gap height h of the sample for push-out load test was 200 $\mu$m as in Example 1, the gap could not be filled, so that the push-out load test was not conducted.

[Comparative Example 5]

An insulating sheet and an insulating member were obtained in the same manner as in Example 11, except that the obtained expandable layer was heated at 300°C for 5 minutes to be thermocompression bonded. The thickness of the obtained insulating sheet was 131 $\mu$m, and the thickness of the insulating member was 134 $\mu$m. Due to the flow of the resin of the insulating layer, the bending of the reinforcing fibers of the expandable layer decreased, and as a result, almost no expansion occurred when heating was performed under no load, so that no further evaluation was made.

[Table 1]

| | | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|---|
| Insulating sheet | Configuration | | Expandable layer/insulating layer/expandable layer | | | | Expandable layer/insulating layer | Insulating layer | Expandable layer | Expandable layer/insulating layer | |
| | Thickness | µm | 148 | 158 | 151 | 156 | 153 | 100 | 176 | 165 | 154 |
| | Basis weight | g/m² | 197 | 197 | 195 | 190 | 208 | 127 | 240 | 86 | 84 |
| | Density | g/cm³ | 1.33 | 1.24 | 1.29 | 1.22 | 1.36 | 1.27 | 1.4 | 0.52 | 0.54 |
| | Composite temperature | °C | 240 | 240 | 240 | 240 | 240 | - | - | 300 | 300 |
| Insulating layer | Type | | PEI | LCP | PEI | PEI | PEI | PEI | - | LCP | PEI |
| | Thickness | µm | 100 | 100 | 100 | 100 | 100 | 100 | - | 100 | 100 |
| | Softening point or melting point (Ti) | °C | 217 | 280 | 217 | 217 | 217 | 217 | - | 280 | 217 |
| Penetration layer | Thickness | µm | 1 | 1 | 2 | 1 | 0 | 0 | 0 | 95 | 97 |
| | Properties | Average basis weight (g/m²) | 70 | 70 | 70 | 70 | 80 | 0 | 240 | 80 | 80 |
| | | Thickness (µm) | 48 | 58 | 51 | 56 | 53 | 0 | 176 | 65 | 54 |
| | | Density (g/cm³) | 1.46 | 1.21 | 1.37 | 1.25 | 1.51 | 0 | 1.36 | 1.23 | 1.48 |
| | | Type | GF | GF | CF | GF | GF | - | GF | GF | GF |
| | | Average fiber length (mm) | 13 | 13 | 13 | 13 | 13 | - | 13 | 13 | 13 |
| | | Average fiber diameter (µm) | 10.5 | 10.5 | 7 | 10.5 | 10.5 | - | 10.5 | 10.5 | 10.5 |
| | | Average bent ratio | 1.008 | 1.009 | 1.007 | 1.007 | 1.008 | - | 1.009 | 1.002 | 1.003 |

(continued)

| | | | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|---|---|
| Expandable layer | Reinforcing fibers | Proportion of fibers each having bent ratio of 1.004 or more in reinforcing fibers | vol% | 82.3 | 84.3 | 80.8 | 80.1 | 82.8 | - | 84.2 | 13.2 | 17.2 |
| | | Proportion of fibers each having bent ratio of 1.004 or more in expandable layer | vol% | 19.1 | 20.3 | 25.4 | 21.8 | 22.5 | - | 23.4 | 0.9 | 2.5 |
| | | Density | g/cm$^3$ | 2.54 | 2.54 | 1.82 | 2.54 | 2.54 | - | 2.54 | 2.54 | 2.54 |
| | | Proportion of reinforcing fibers in expandable layer | vol% | 29 | 29 | 37 | 28 | 29 | - | 29 | 29 | 29 |
| | | | wt% | 45 | 45 | 45 | 45 | 45 | - | 45 | 45 | 45 |
| | Thermoplastic resin | Type | | PEI | PEI | PEI | PC | PEI | - | PEI | PEI | PEI |
| | | Softening point or melting point (Tb) | °C | 217 | 217 | 217 | 150 | 217 | - | 217 | 217 | 217 |
| | | Density of thermoplastic resin | g/cm$^3$ | 1.28 | 1.28 | 1.28 | 1.21 | 1.28 | - | 1.28 | 1.28 | 1.28 |
| | | Proportion of thermoplastic resin in expandable layer | vol% | 71 | 71 | 63 | 72 | 71 | - | 71 | 71 | 71 |
| | | | wt% | 55 | 55 | 55 | 55 | 55 | - | 55 | 55 | 55 |

(continued)

| | | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|---|
| Expandable layer pre-cursor | Thermoplas-tic fibers | Type | PEI | PEI | PEI | PC | PEI | - | PEI | PEI | PEI |
| | | Density g/cm$^3$ | 1.27 | 1.27 | 1.27 | 1.2 | 1.27 | - | 1.27 | 1.27 | 1.27 |
| | | Weight ratio wt% | 50 | 50 | 50 | 50 | 50 | - | 50 | 50 | 50 |
| | Binder fibers | Type | PET | PET | PET | PET | PET | - | PET | PET | PET |
| | | Density g/cm$^3$ | 1.38 | 1.38 | 1.38 | 1.38 | 1.38 | - | 1.38 | 1.38 | 1.38 |
| | | Weight ratio wt% | 5 | 5 | 5 | 5 | 5 | - | 5 | 5 | 5 |
| | Reinforcing fibers | Type | GF | GF | CF | GF | GF | - | GF | GF | GF |
| | | Density g/cm$^3$ | 2.54 | 2.54 | 1.82 | 2.54 | 2.54 | - | 2.54 | 2.54 | 2.54 |
| | | Weight ratio wt% | 45 | 45 | 45 | 45 | 45 | - | 45 | 45 | 45 |

[Table 2]

| | | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|---|
| Insulating member | Configuration | | Void layer/insulating layer/void layer | | | | Void layer/insulating layer | Insulating layer | Void layer | Void layer/insulating layer | |
| | Void layer porosity/insulating layer thickness (Y/X) | | 0.65 | 0.72 | 0.67 | 0.67 | 0.74 | 0 | - | 8.15 | 15.14 |
| Insulating layer | Thickness (X) | μm | 99 | 99 | 98 | 99 | 100 | 100 | 0 | 5 | 3 |
| | E'Tg/E'25 | % | 0.8 | 7.2 | 0.8 | 81 | 0.8 | - | | 7.2 | 0.8 |
| | Thickness of insulating layer in insulating member /thickness of insulating layer before combining | % | 99 | 99 | 98 | 99 | 100 | - | - | 5 | 3 |
| Void layer | Porosity (Y) | % | 64 | 71 | 66 | 66 | 74 | 0 | 79 | 41 | 45 |
| | Release rate of bent ratio (%) | % | 73 | 70 | 75 | 79 | 72 | - | 75 | 18 | 27 |

EP 4 492 644 A1

| Properties | | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|---|
| Properties | Maximum expansion ratio under no load | % | 148 | 158 | 158 | 147 | 187 | 0 | 403 | 110 | 123 |
| | Maximum thickness under no load | μm | 219 | 249 | 239 | 230 | 286 | 100 | 709 | 182 | 189 |
| | Rate of dimensional change in direction orthogonal to thickness | % | -0.2 | -0.2 | -0.1 | -0.2 | -0.2 | - | -0.3 | -0.1 | -0.1 |
| | Breakdown voltage | kV/mm | 55 | 54 | 50 | 57 | 48 | - | 4 | 33 | 24 |
| | Push-out load | N | 21 | 20 | 23 | 13 | 15 | - | 35 | - | - |
| | Expansion ratio after filling | % | 135 | 127 | 132 | 128 | 131 | Could not be filled | 114 | Could not be filled | Could not be filled |
| | Porosity after filling | % | 58 | 58 | 53 | 56 | 51 | - | 27 | - | - |

As shown in Tables 1 and 2, in Comparative Example 1, since the insulating member does not have an expandable layer, a void layer cannot be formed by expansion. In Comparative Example 2, expansion occurs, but the breakdown voltage is inferior. Also, in Comparative Examples 3 and 4, since the porosity of the void layer and the thickness of the insulating layer are not in predetermined ranges, the insulating member after expansion is inferior in breakdown voltage compared to the Examples.

Meanwhile, in each of Examples 1 to 5, even though the insulating member is formed by expansion, and the insulating member after expansion has voids, a very large value of breakdown voltage is exhibited compared to Comparative Example 2. In particular, good insulating properties are exhibited regardless of the retention rate of the thermoplastic resin constituting the void layer at room temperature and at the softening temperature.

[Table 3]

| | | | Example 6 | Example 7 | Example 8 | Example 9 | Example 10 | Example 11 | Example 12 | Comparative Example 5 | Example 13 | Example 14 |
|---|---|---|---|---|---|---|---|---|---|---|---|---|
| Insulating sheet | Configuration | | Expandable layer/insulating laver/expandable laver | | | | | Expandable layer/insulating laver/expandable laver | | | | |
| | Thickness | μm | 226 | 96 | 245 | 71 | 144 | 151 | 148 | 131 | 149 | 145 |
| | Basis weight | g/m² | 285 | 128 | 322 | 89 | 194 | 179 | 186 | 106 | 162 | 182 |
| | Density | g/cm³ | 1.26 | 1.33 | 1.31 | 1.26 | 1.35 | 1.18 | 1.26 | 0.81 | 1.09 | 1.26 |
| | Composite temperature | °C | 240 | 240 | 240 | 240 | 240 | 240 | 260 | 300 | 240 | 240 |
| Insulating layer | Type | | PEI | PEI | PEI | PEI | GFRTP | LCP | LCP | LCP | LCP | LCP |
| | Thickness | μm | 100 | 50 | 200 | 20 | 98 | 100 | 100 | 18 | 100 | 100 |
| | Softening point or melting point (Ti) | °C | 217 | 217 | 217 | 217 | 217 | 280 | 280 | 280 | 280 | 280 |
| Penetration layer | Thickness | μm | 2 | 5 | 3 | 4 | 1 | 15 | 9 | 72 | 1 | 3 |
| | Properties | Average basis weight | g/m² | 160 | 70 | 70 | 70 | 70 | 70 | 70 | 70 | 70 | 70 |
| | | Thickness | μm | 126 | 46 | 45 | 52 | 46 | 51 | 48 | 31 | 49 | 45 |
| | | Density | g/cm³ | 1.27 | 1.52 | 1.56 | 1.35 | 1.52 | 1.37 | 1.46 | 2.26 | 1.43 | 1.56 |

(continued)

| | | | Example 6 | Example 7 | Example 8 | Example 9 | Example 10 | Example 11 | Example 12 | Comparative Example 5 | Example 13 | Example 14 |
|---|---|---|---|---|---|---|---|---|---|---|---|---|
| Reinforcing fibers | Type | | GF | GF | GF | GF | GF | GF | GF | GF | GF | GF |
| | Average fiber length | mm | 13 | 13 | 13 | 13 | 13 | 13 | 13 | 13 | 13 | 13 |
| | Average fiber diameter | μm | 10.5 | 10.5 | 10.5 | 10.5 | 10.5 | 10.5 | 10.5 | 10.5 | 10.5 | 10.5 |
| | Average bent ratio | | 1.006 | 1.008 | 1.006 | 1.009 | 1.008 | 1.008 | 1.008 | 1.003 | 1.008 | 1.008 |
| | Proportion of fibers each having bent ratio of 1.004 or more in reinforcing fibers | vol% | 80.3 | 79.2 | 77.8 | 85.1 | 82.3 | 82.3 | 82.3 | 14.5 | 82.3 | 82.3 |
| Expandable layer | Proportion of fibers each having bent ratio of 1.004 or more in expandable layer | vol% | 22.3 | 19.2 | 18.7 | 24.8 | 19.1 | 19.1 | 19.1 | 0.8 | 19.1 | 19.1 |
| | Density | g/cm³ | 2.54 | 2.54 | 2.54 | 2.54 | 2.54 | 2.54 | 2.54 | 2.54 | 2.54 | 2.54 |
| | Proportion of reinforcing fibers in expandable layer | vol% | 29 | 29 | 29 | 29 | 29 | 30 | 30 | 30 | 24 | 30 |
| | | wt% | 45 | 45 | 45 | 45 | 45 | 46 | 46 | 46 | 47 | 48 |

| | | | | Example 6 | Example 7 | Example 8 | Example 9 | Example 10 | Example 11 | Example 12 | Comparative Example 5 | Example 13 | Example 14 |
|---|---|---|---|---|---|---|---|---|---|---|---|---|---|
| | Thermoplastic resin | Type | | PEI | PEI | PEI | PEI | PEI | PEI | PEI | PEI | PP | PA6 |
| | | Softening point or melting point (Tb) | °C | 217 | 217 | 217 | 217 | 217 | 217 | 217 | 217 | 161 | 225 |
| | | Density of thermoplastic resin | g/cm$^3$ | 1.28 | 1.28 | 1.28 | 1.28 | 1.28 | 1.28 | 1.28 | 1.28 | 0.93 | 1.16 |
| | | Proportion of thermoplastic resin in expandable layer | vol% | 71 | 71 | 71 | 71 | 71 | 70 | 70 | 70 | 76 | 70 |
| | | | wt% | 55 | 55 | 55 | 55 | 55 | 54 | 54 | 54 | 53 | 52 |
| Expandable layer precursor | Thermoplastic fibers | Type | | PEI | PEI | PEI | PEI | PEI | PEI | PEI | PEI | PP | PA6 |
| | | Density | g/cm$^3$ | 1.27 | 1.27 | 1.27 | 1.27 | 1.27 | 1.27 | 1.27 | 1.27 | 0.9 | 1.14 |
| | | Weight ratio | wt% | 50 | 50 | 50 | 50 | 50 | 50 | 50 | 50 | 50 | 50 |
| | Binder fibers | Type | | PET | PET | PET | PET | PET | PET | PET | PET | PET | PET |
| | | Density | g/cm$^3$ | 1.38 | 1.38 | 1.38 | 1.38 | 1.38 | 1.38 | 1.38 | 1.38 | 1.38 | 1.38 |
| | | Weight ratio | wt% | 5 | 5 | 5 | 5 | 5 | 5 | 5 | 5 | 5 | 5 |
| | Reinforcing fibers | Type | | GF | GF | GF | GF | GF | GF | GF | GF | GF | GF |
| | | Density | g/cm$^3$ | 2.54 | 2.54 | 2.54 | 2.54 | 2.54 | 2.54 | 2.54 | 2.54 | 2.54 | 2.54 |
| | | Weight ratio | wt% | 45 | 45 | 45 | 45 | 45 | 45 | 45 | 45 | 45 | 45 |

EP 4 492 644 A1

[Table 4]

| | | | Example 6 | Example 7 | Example 8 | Example 9 | Example 10 | Example 11 | Example 12 | Comparative Example 5 | Example 13 | Example 14 |
|---|---|---|---|---|---|---|---|---|---|---|---|---|
| Insulating member | Configuration | | Void layer/insulating layer/void layer | | | | | | Void layer/insulating layer/void layer | | | |
| | Void layer porosity/insulating layer thickness (Y/X) | | 0.31 | 1.73 | 0.08 | 3.17 | 0.60 | 0.68 | 0.63 | - | 0.48 | 0.57 |
| Insulating layer | Thickness (X) | μm | 98 | 45 | 197 | 15 | 97 | 85 | 91 | 28 | 99 | 97 |
| | E'Tg/E'25 | % | 0.8 | 0.8 | 0.8 | 0.8 | 0.8 | 7.2 | 7.2 | 7.2 | 99 | 99 |
| | Thickness of insulating layer in insulating member / thickness of insulating layer before combining | % | 98 | 90 | 99 | 75 | 99 | 85 | 91 | 156 | 99 | 97 |
| Void layer | Porosity (Y) | % | 31 | 78 | 15 | 48 | 58 | 58 | 58 | - | 47 | 55 |
| | Release rate of bent ratio (%) | % | 65 | 78 | 71 | 82 | 74 | 75 | 78 | - | 71 | 74 |

(continued)

| Properties | | Example 6 | Example 7 | Example 8 | Example 9 | Example 10 | Example 11 | Example 12 | Comparative Example 5 | Example 13 | Example 14 |
|---|---|---|---|---|---|---|---|---|---|---|---|
| Maximum expansion ratio under no load | % | 194 | 241 | 137 | 293 | 144 | 181 | 166 | 102 | 136 | 153 |
| Maximum thickness under no load | μm | 439 | 231 | 335 | 208 | 208 | 273 | 245 | 134 | 203 | 222 |
| Rate of dimensional change in direction orthogonal to thickness | % | -0.1 | -0.1 | -0.2 | -0.3 | -0.2 | -0.1 | -0.1 | - | -0.1 | -0.2 |
| Breakdown voltage | kV/mm | 40 | 45 | 51 | 62 | 58 | 51 | 54 | - | 54 | 53 |
| Push-out load | N | 131 | 17 | 31 | 21 | 19 | 22 | 19 | - | 5 | 8 |
| Expansion ratio after filling | % | 106 | 208 | 102 | 141 | 139 | 132 | 135 | Could not be filled | 134 | 138 |

As shown in Tables 3 and 4, in Comparative Example 5, since the composite temperature is high when producing the insulating sheet, the thermoplastic resin constituting the insulating layer flows, and the bent ratio of the reinforcing fibers in the insulating sheet cannot be increased. Therefore, thermal expandability is poor, and a void layer cannot be formed by expansion.

Meanwhile, in each of Examples 6 to 14, since the insulating member which expanded well has a value of Y/X within a predetermined range, even though the insulating member after expansion has voids, a very large value of breakdown voltage is exhibited compared to Comparative Example 2.

Also, in each of Examples 1 to 14, expansion is possible in the thickness direction, and anisotropic expandability is exhibited compared to the case of forming a void layer using a foaming material. Furthermore, in each Example, force is required to push out, which indicates adhesiveness to an adherend.

INDUSTRIAL APPLICABILITY

The insulating member of the present invention not only can insulate a conductive member but also can fix the conductive member, and thus is useful in various applications. For example, the insulating member is particularly useful in applications in a rotating electrical machine, such as an insulating member for a rotating electrical machine, cable coating materials, electrical wire coating materials, etc.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

[Reference Numerals]

| | |
|---|---|
| 1, 100 | rotating electrical machine |
| 2 | stator |
| 3 | rotor |
| 4 | stator core |
| 4a | tooth |
| 5 | reinforcing fiber |
| 6 | coil |
| 8 | slot portion |
| 10, 20 | insulating member |
| 13, 23, 33 | insulating layer |
| 15, 25a, 25b | void layer |
| 30 | insulating sheet |
| 35 | expandable layer |
| 42a | hollow square member (large) |
| 42b | hollow square member (small) |
| L | fiber length |
| $L_0$ | shortest distance between opposite ends of fiber |
| h | gap height |

**Claims**

1. An insulating member for insulating a conductive member, the insulating member comprising at least one insulating layer and at least one void layer, wherein the insulating member fixes the conductive member,

the at least one void layer includes a thermoplastic resin and a plurality of reinforcing fibers,
voids are formed between the plurality of reinforcing fibers, and
a porosity Y [%] of the void layer in the insulating member and a thickness X [$\mu$m] of the insulating layer in the insulating member satisfy the following formula (1):

$$0.01 \leq Y/X \leq 4.75 \qquad (1).$$

2. The insulating member as claimed in claim 1, wherein the reinforcing fibers are at least one selected from the group consisting of glass fibers, liquid crystal polyester fibers, aramid fibers, and carbon fibers.

3. The insulating member as claimed in claim 1 or 2, wherein the at least one insulating layer includes a thermoplastic resin or a thermosetting resin, the thermoplastic resin or the thermosetting resin optionally including a filler and/or strengthening fibers.

4. The insulating member as claimed in claim 1 or 2, wherein the at least one insulating layer includes at least one thermoplastic resin selected from the group consisting of polyetherimide, polyethylene terephthalate, polyethylene naphthalate, and liquid crystal polyester, the at least one thermoplastic resin optionally including a filler and/or strengthening fibers.

5. The insulating member as claimed in any one of claims 1 to 4, wherein

the at least one insulating layer includes a thermoplastic resin having a melting point or softening point Ti,
the at least one void layer includes a thermoplastic resin having a melting point or softening point Tb, and
Ti ≥ Tb is satisfied.

6. The insulating member as claimed in any one of claims 1 to 5, wherein the thermoplastic resin constituting the at least one void layer is at least one selected from the group consisting of polyetherimide, liquid crystal polyester, polycarbonate, and phenoxy resin.

7. The insulating member as claimed in any one of claims 1 to 6, the insulating member being configured to be used in a rotating electrical machine.

8. A rotating electrical machine comprising, in at least a part of the rotating electrical machine, the insulating member as recited in claim 7.

9. A stator of a rotating electrical machine, the stator comprising:

a stator core having teeth and slots alternately in a circumferential direction thereof; and
coils mounted on the stator core; and
the insulating member as recited in claim 7, the insulating member being disposed between an inner peripheral surface of a slot and a coil.

10. An insulating sheet at least comprising at least one insulating layer and at least one expandable layer, wherein

the at least one expandable layer includes a thermoplastic resin and a plurality of reinforcing fibers,
the reinforcing fibers have a plurality of intersections,
at least some of the intersections are bonded with the thermoplastic resin, and
a volume content of reinforcing fibers each having a bent ratio of 1.004 or more with respect to a volume of the total reinforcing fibers is 20 vol% or more, the bent ratio being defined by the following formula (2),

$$\text{bent ratio} = \text{fiber length} \,/\, \text{shortest distance between opposite ends of a fiber} \qquad (2).$$

11. The insulating sheet as claimed in claim 10, wherein, in the at least one expandable layer, a volume content of the reinforcing fibers each having a bent ratio of 1.004 or more in an expandable layer with respect to a volume of the expandable layer is 3 to 50 vol%.

12. The insulating sheet as claimed in claim 10 or 11, wherein an average fiber length of the reinforcing fibers is 3 to 100 mm.

13. The insulating sheet as claimed in any one of claims 10 to 12, wherein the reinforcing fibers are at least one selected from the group consisting of glass fibers, liquid crystal polyester fibers, aramid fibers, and carbon fibers.

14. The insulating sheet as claimed in any one of claims 10 to 13, wherein a resin having adhesiveness to a metal is exposed on at least one surface of the insulating sheet.

15. The insulating sheet as claimed in any one of claims 10 to 14, wherein the resin having adhesiveness to a metal is at least one selected from the group consisting of polyetherimide, liquid crystal polyester, polycarbonate, and phenoxy.

16. The insulating sheet as claimed in any one of claims 10 to 15, wherein the at least one insulating layer includes a thermoplastic resin or a thermosetting resin, the thermoplastic resin or the thermosetting resin optionally including a filler and/or strengthening fibers.

17. The insulating sheet as claimed in any one of claims 10 to 15, wherein the at least one insulating layer includes at least one thermoplastic resin selected from the group consisting of polyetherimide, polyethylene terephthalate, polyethylene naphthalate, and liquid crystal polyester, the at least one thermoplastic resin optionally including a filler and/or strengthening fibers.

18. The insulating sheet as claimed in any one of claims 10 to 17, wherein

the at least one insulating layer includes a thermoplastic resin having a melting point or softening point $T_i$,
the at least one expandable layer includes a thermoplastic resin having a melting point or softening point $T_b$, and
$T_i \geq T_b$ is satisfied.

19. The insulating sheet as claimed in any one of claims 10 to 18, wherein the thermoplastic resin constituting the at least one expandable layer is at least one selected from the group consisting of polyetherimide, liquid crystal polyester, polycarbonate, and phenoxy resin.

20. The insulating sheet as claimed in any one of claims 10 to 19, wherein

the at least one insulating layer includes a thermoplastic resin, and
the insulating layer include a penetration layer having a thickness of 20 $\mu$m or less at an interface with the expandable layer.

21. A method for producing an insulating member, the method comprising:

a step of preparing the insulating sheet as recited in any one of claims 10 to 20, and/or at least one insulating layer and at least one expandable layer as recited in any one of claims 10 to 20; and
a step of heating the insulating sheet, and/or the at least one insulating layer and the at least one expandable layer to a temperature equal to or higher than a melting point or softening point $T_b$ of the thermoplastic resin forming the at least one expandable layer, to expand the expandable layer to fix and insulate a conductive member.

Fig. 1A

Fig. 1B

Fig. 2

## Fig. 3A

HEATING

## Fig. 3B

Fig. 4

$$L$$

$$L_0$$

5

Fig. 5

Fig. 6A

42b

42a

Fig. 6B

42a

30

42b

h

## Fig. 7

## Fig. 8

INSULATING LAYER

PENETRATION LAYER

EXPANDABLE LAYER

100 µm
x 200     2021/12/10

Fig. 9

INSULATING LAYER

PENETRATION LAYER

EXPANDABLE LAYER

## INTERNATIONAL SEARCH REPORT

| International application No. |
|---|
| **PCT/JP2023/008026** |

### A. CLASSIFICATION OF SUBJECT MATTER

*H02K 3/30*(2006.01)i; *H01B 3/30*(2006.01)i; *H01B 3/47*(2006.01)i; *H01B 17/62*(2006.01)i; *H01F 5/06*(2006.01)i; *H01F 27/32*(2006.01)i; *H02K 3/34*(2006.01)i

FI: H02K3/30; H01B3/30 Q; H01B3/47; H01B17/62; H01F5/06 S; H01F27/32 140; H02K3/34 C

According to International Patent Classification (IPC) or to both national classification and IPC

### B. FIELDS SEARCHED

Minimum documentation searched (classification system followed by classification symbols)

H02K3/30; H01B3/30; H01B3/47; H01B17/62; H01F5/06; H01F27/32; H02K3/34

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2012-170311 A (TOYOTA MOTOR CORP) 06 September 2012 (2012-09-06) entire text, all drawings | 1-21 |
| A | JP 6-225489 A (FUJI ELECTRIC CO LTD) 12 August 1994 (1994-08-12) entire text, all drawings | 1-21 |
| A | JP 58-15445 A (HITACHI LTD) 28 January 1983 (1983-01-28) entire text, all drawings | 1-21 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 May 2023** | **23 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/008026**

| Patent document cited in search report | | | Publication date (day/month/year) | Patent family member(s) | Publication date (day/month/year) |
|---|---|---|---|---|---|
| JP | 2012-170311 | A | 06 September 2012 | (Family: none) | |
| JP | 6-225489 | A | 12 August 1994 | (Family: none) | |
| JP | 58-15445 | A | 28 January 1983 | (Family: none) | |

Form PCT/ISA/210 (patent family annex) (January 2015)

49

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022035082 A
- JP 2021129408 A
- JP 2020120528 A